(19)

**Europäisches Patentamt**
**European Patent Office**
**Office européen des brevets**

(11) **EP 3 944 537 A1**

(12) **EUROPEAN PATENT APPLICATION**
published in accordance with Art. 153(4) EPC

(43) Date of publication:
**26.01.2022 Bulletin 2022/04**

(21) Application number: **20802038.8**

(22) Date of filing: **29.04.2020**

(51) International Patent Classification (IPC):
*H04L 1/18* (2006.01)     *H04L 1/16* (2006.01)
*H04L 1/08* (2006.01)     *H04L 5/00* (2006.01)
*H04L 5/16* (2006.01)     *H04W 4/70* (2018.01)
*H04W 72/12* (2009.01)

(52) Cooperative Patent Classification (CPC):
**H04L 1/08; H04L 1/16; H04L 1/18; H04L 5/00;**
**H04L 5/16; H04W 4/70; H04W 72/12**

(86) International application number:
**PCT/KR2020/005741**

(87) International publication number:
**WO 2020/226356 (12.11.2020 Gazette 2020/46)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.05.2019 KR 20190052429**
**08.11.2019 KR 20190142882**

(71) Applicant: **LG Electronics Inc.**
**SEOUL 07336 (KR)**

(72) Inventors:
• **HWANG, Seunggye**
**Seoul 06772 (KR)**
• **KIM, Jaehyung**
**Seoul 06772 (KR)**
• **PARK, Changhwan**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD FOR TRANSMITTING OR RECEIVING SIGNAL FOR MULTIPLE TRANSPORT BLOCK SCHEDULING AND APPARATUS THEREFOR**

(57)     The present invention relates to a method for transmitting hybrid automatic repeat request acknowledgement (HARQ-ACK) information by a half duplex (HD)-frequency division duplex (FDD) method in a wireless communication system supporting multiple transport block scheduling, and an apparatus therefor. The method comprises: receiving downlink control information (DCI) scheduling N transport blocks; repeatedly receiving the N transport blocks on the basis of the DCI by R times without interleaving; and starting transmission of hybrid automatic repeat request acknowledgement (HARQ-ACK) information of the N transport blocks after a particular number of subframes from a time point at which the reception of the N transport blocks is complete, wherein the particular number is determined to be the larger value among 1 and (3-(N-1)*R).

FIG. 22

EP 3 944 537 A1

**Description**

**TECHNICAL FIELD**

The present disclosure relates to a wireless communication system, and more particularly, to a method and apparatus for transmitting and receiving a signal in a wireless communication system supporting multi-transport block scheduling.

**BACKGROUND ART**

Wireless communication systems are widely developed to provide various kinds of communication services including audio communications, data communications and the like. Generally, a wireless communication system is a kind of a multiple access system capable of supporting communications with multiple users by sharing available system resources (e.g., bandwidth, transmission power, etc.). For instance, multiple access systems include CDMA (code division multiple access) system, FDMA (frequency division multiple access) system, TDMA (time division multiple access) system, OFDMA (orthogonal frequency division multiple access) system, SC-FDMA (single carrier frequency division multiple access) system and the like.

**DISCLOSURE**

**TECHNICAL PROBLEM**

The object of the present disclosure is to provide a method and apparatus for efficiently transmitting and receiving a signal in a wireless communication system supporting multi-transport block scheduling.

Specifically, the object of the present disclosure is to provide a method and apparatus for efficiently transmitting and receiving feedback information for a downlink signal in a wireless communication system supporting multi-transport block scheduling.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, a method of transmitting hybrid automatic repeat request acknowledgment (HARQ-ACK) information by a user equipment (UE) operating in half duplex frequency division duplex (HD-FDD) in a wireless communication system supporting multi-transport block scheduling is provided. The method may include: receiving downlink control information (DCI) scheduling N transport blocks; receiving the N transport blocks R times repeatedly without interleaving based on the DCI; and starting transmission of HARQ-ACK information for the N transport blocks after a specific number of subframes from a time at which the reception of the N transport blocks ends. The specific number may be determined as a greater of (3-(N-1)*R) and 1.

In another aspect of the present disclosure, a UE configured to operate in HD-FDD and transmit HARQ-ACK information in a wireless communication system supporting multi-transport block scheduling is provided. The UE may include: a transceiver; and a processor configured to control the transceiver and perform operations including: receiving DCI scheduling N transport blocks; receiving the N transport blocks R times repeatedly without interleaving based on the DCI; and starting transmission of HARQ-ACK information for the N transport blocks after a specific number of subframes from a time at which the reception of the N transport blocks ends. The specific number may be determined as a greater of (3-(N-1)*R) and 1.

In a further aspect of the present disclosure, a computer-readable storage medium storing instructions configured to cause a processor to implement operations when executed by the processor is provided. The operations may include: receiving DCI scheduling N transport blocks; receiving the N transport blocks R times repeatedly without interleaving based on the DCI; and starting transmission of HARQ-ACK information for the N transport blocks after a specific number of subframes from a time at which the reception of the N transport blocks ends. The operations may be performed in HD-FDD, and the specific number may be determined as a greater of (3-(N-1)*R) and 1.

Preferably, the HARQ-ACK information for the N transport blocks may be transmitted based on bundling.

More preferably, based on that a number of HARQ processes scheduled by the DCI is P and a maximum number of HARQ processes bundled into one piece of HARQ-ACK information is Q, a number of pieces of the bundled HARQ-ACK information may be $\lceil P/Q \rceil$, where $\lceil \ \rceil$ denotes a ceiling function.

More preferably, based on that a number of HARQ processes scheduled by the DCI is P, a number of pieces of the bundled HARQ-ACK information is T, and mod(P,T) is 0, a same number of HARQ processes may be determined in relation to the bundled HARQ-ACK information. Based on that the mod(P,T) is not 0, a number of HARQ processes related to bundled HARQ-ACK information early in order may be determined more than a number of HARQ processes related to bundled HARQ-ACK information late in the order, where mod denotes a modulo operation.

More preferably, HARQ processes related to the bundled HARQ-ACK information may be determined based on order of receiving the transport blocks.

More preferably, HARQ processes related to the bundled HARQ-ACK information may be determined based on HARQ process identification information.

Preferably, the wireless communication system may support machine type communication (MTC), and the UE may be configured with coverage enhanced (CE) mode A.

Preferably, N may be an integer greater than 1, and R may be an integer greater than or equal to 1.

## ADVANTAGEOUS EFFECTS

According to the present disclosure, a signal may be efficiently transmitted and received in a wireless communication system supporting multi-transport block scheduling.

Specifically, according to the present disclosure, feedback information for a downlink signal may be efficiently transmitted and received in a wireless communication system supporting multi-transport block scheduling.

It will be appreciated by persons skilled in the art that the effects that could be achieved with the present disclosure are not limited to what has been particularly described hereinabove and other advantages of the present disclosure will be more clearly understood from the following detailed description.

## DESCRIPTION OF DRAWINGS

The accompanying drawings, which are included to provide a further understanding of the present disclosure, illustrate embodiments of the disclosure and together with the description serve to explain the principle of the present disclosure.

FIG. 1 illustrates physical channels used in a 3rd generation partnership project (3GPP) system and general signal transmission.
FIG. 2 illustrates a random access procedure.
FIG. 3 illustrates a long-term evolution (LTE) radio frame structure.
FIG. 4 illustrates the structure of a slot of an LTE frame.
FIG. 5 illustrates the structure of a downlink subframe of an LTE system.
FIG. 6 illustrates the structure of an uplink subframe used in LTE.
FIG. 7 illustrates the structure of a radio frame used in a new radio (NR) system.
FIG. 8 illustrates the structure of a slot of an NR frame.
FIG. 9 illustrates physical channels used for machine type communication (MTC) and general signal transmission using the same.
FIG. 10 illustrates cell coverage enhancement in MTC.
FIG. 11 illustrates signal bands for MTC.
FIG. 12 illustrates scheduling in legacy LTE and MTC.
FIG. 13 illustrates physical channels used for narrowband Internet of Things (NB-IoT) and general signal transmission using the same.
FIG. 14 illustrates a frame structure in a subcarrier spacing of 15 kHz, and FIG. 15 illustrates a frame structure in a subcarrier spacing of 3.75 kHz.
FIG. 16 illustrates transmission of NB-IoT DL physical channels/signals.
FIGS. 17 and 18 illustrate relationships between downlink control information (DCI) transport blocks (TBs), and hybrid automatic repeat request acknowledgment (HARQ-ACK feedback) in a time domain.
FIGS. 19 and 20 illustrate scheduling delay designation methods when multi-TB scheduling is performed.
FIGS. 21 and 22 are flowcharts illustrating operations to which the methods proposed in the present disclosure are applicable.
FIG. 23 illustrates a transmission/reception process between a base station and a user equipment to which the methods proposed in the present disclosure are applicable.
FIGS. 24 to 26 illustrate examples to which the methods proposed in the present disclosure are applied.
FIG. 27 illustrates interleaved transmission and non-interleaved transmission.
FIG. 28 illustrates an example to which the methods proposed in the present disclosure are applied.
FIG. 29 illustrates a communication system applied to the present disclosure.

FIG. 30 illustrates wireless devices applicable to the present disclosure.

FIG. 31 illustrates another example of wireless devices applied to the present disclosure.

FIG. 32 illustrates a mobile device applied to the present disclosure.

FIG. 33 illustrates a vehicle or an autonomous driving vehicle applied to the present disclosure.

**BEST MODE**

In the following description, downlink (DL) refers to communication from a base station (BS) to a user equipment (UE), and uplink (UL) refers to communication from the UE to the BS. In the case of DL, a transmitter may be a part of the BS, and a receiver may be a part of the UE. In the case of UL, a transmitter may be a part of the UE, and a receiver may be a part of the BS.

The technology described herein is applicable to various wireless access systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA may be implemented as radio technology such as universal terrestrial radio access (UTRA) or CDMA2000. The TDMA may be implemented as radio technology such as global system for mobile communications (GSM), general packet radio service (GPRS), or enhanced data rates for GSM evolution (EDGE). The OFDMA may be implemented as radio technology such as the Institute of Electrical and Electronics Engineers (IEEE) 802.11 (Wi-Fi), IEEE 802.16 (WiMAX), IEEE 802-20, evolved UTRA (E-UTRA), etc. The UTRA is a part of a universal mobile telecommunication system (UMTS). The 3rd generation partnership project (3GPP) long term evolution (LTE) is a part of an evolved UMTS (E-UMTS) using the E-UTRA. LTE-advance (LTE-A) or LTE-A pro is an evolved version of the 3GPP LTE. 3GPP new radio or new radio access technology (3GPP NR) or 5G is an evolved version of the 3GPP LTE, LTE-A, or LTE-A pro.

Although the present disclosure is described based on 3GPP communication systems (e.g., LTE-A, NR, etc.) for clarity of description, the spirit of the present disclosure is not limited thereto. The LTE refers to the technology beyond 3GPP technical specification (TS) 36.xxx Release 8. In particular, the LTE technology beyond 3GPP TS 36.xxx Release 10 is referred to as the LTE-A, and the LTE technology beyond 3GPP TS 36.xxx Release 13 is referred to as the LTE-A pro. The 3GPP 5G means the technology beyond TS 36.xxx Release 15 and 3GPP NR refers to the technology beyond 3GPP TS 38.xxx Release 15. The LTE/NR may be called '3GPP system'. Herein, "xxx" refers to a standard specification number. The LTE/NR may be commonly referred to as '3GPP system'. Details of the background, terminology, abbreviations, etc. used herein may be found in documents published before the present disclosure. For example, the following documents may be referenced.

3GPP LTE

- 36.211: Physical channels and modulation
- 36.212: Multiplexing and channel coding
- 36.213: Physical layer procedures
- 36.300: Overall description
- 36.304: User Equipment (UE) procedures in idle mode
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.304: User Equipment (UE) procedures in Idle mode and RRC Inactive state
- 36.331: Radio Resource Control (RRC) protocol specification

Evolved UMTS terrestrial radio access network (E-UTRAN), LTE, LTE-A, LTE-A pro, and 5th generation (5G) systems may be generically called an LTE system. A next generation radio access network (NG-RAN) may be referred to as an NR system. A UE may be fixed or mobile. The term UE is interchangeably used with other terms such as terminal, mobile station (MS), user terminal (UT), subscriber station (SS), mobile terminal (MT), and wireless device. A BS is generally a fixed station communicating with a UE. The term BS is interchangeably used with other terms such as evolved Node B (eNB), general Node B (gNB), base transceiver system (BTS), and access point (AP).

## A. Physical Channels and Frame Structures

Physical Channels and General Signal Transmission

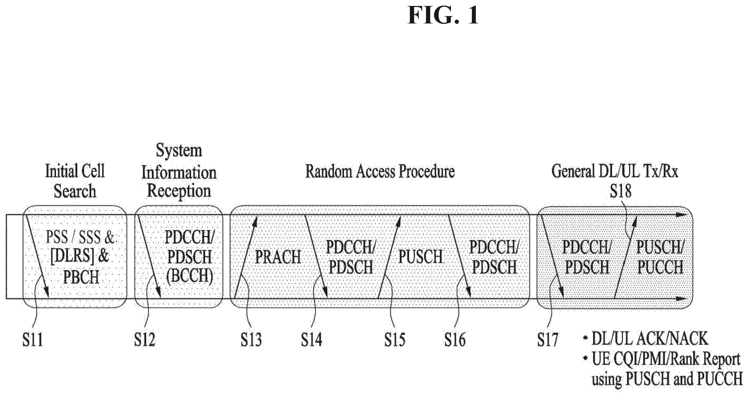

FIG. 1 is a diagram illustrating physical channels and a general signal transmission procedure in a 3GPP system. In a wireless communication system, a UE receives information from a BS on DL and transmits information to the BS on UL. The information transmitted and received between the UE and the BS includes data and various types of control information. There are many physical channels according to the types/uses of information transmitted and received between BS and the UE.

When a UE is powered on or enters a new cell, the UE performs initial cell search including acquisition of synchronization with a BS (S11). For the initial cell search, the UE synchronizes its timing with the BS and acquires information such as a cell identifier (ID) by receiving a primary synchronization signal (PSS) and a secondary synchronization signal (SSS) from the BS. The UE may further acquire information broadcast in the cell by receiving a physical broadcast channel (PBCH) from the BS. During the initial cell search, the UE may further monitor a DL channel state by receiving a downlink reference signal (DL RS).

After the initial cell search, the UE may acquire more detailed system information by receiving a physical downlink control channel (PDCCH) and receiving a physical downlink shared channel (PDSCH) corresponding to the PDCCH (S12).

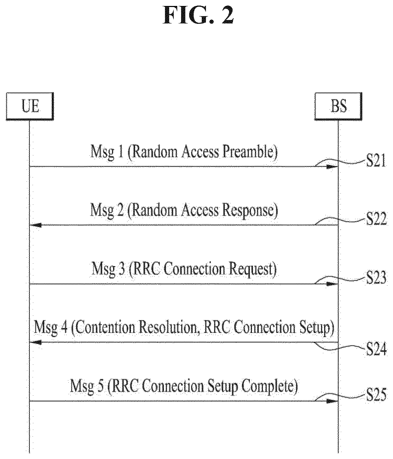

Subsequently, to complete the connection to the BS, the UE may perform a random access procedure (see FIG. 2 and a related description) with the BS (S13 to S16). Specifically, the UE may transmit a random access preamble on a physical random access channel (PRACH) (S13) and may receive a PDCCH and a random access response (RAR) to the preamble on a PDSCH corresponding to the PDCCH (S14). The UE may then transmit a physical uplink shared channel (PUSCH) by using scheduling information included in the RAR (S15), and perform a contention resolution procedure including reception of a PDCCH and a PDSCH corresponding to the PDCCH (S16).

After the above procedure, the UE may receive a PDCCH and/or a PDSCH from the BS (S17) and transmit a PUSCH and/or a physical uplink control channel (PUCCH) to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), a rank indication (RI), and so on. In general, UCI is transmitted on the PUCCH. However, if control information and data should be transmitted simultaneously, the control information may be transmitted on the PUSCH. In addition, the UE may transmit the UCI aperiodically on the PUSCH, upon receipt of a request/command from a network.

FIG. 2 is a diagram illustrating a random access procedure.

The random access procedure is performed during initial access in RRC idle mode (or RRC_IDLE state), during initial access after radio link failure (RLF), during handover requiring the random access procedure, or upon generation of UL/DL data requiring the random access procedure in RRC connected mode (or RRC_CONNECTED state). The random access procedure may also be referred to as a random access channel (RACH) procedure. Some RRC messages such as an RRC Connection Request message, a Cell Update message, and a URA Update message are also transmitted in the random access procedure. Logical channels, common control channel (CCCH), dedicated control channel (DCCH), and dedicated traffic channel (DTCH) may be mapped to a transport channel RACH. The transport channel RACH is mapped to a physical channel PRACH. When the medium access control (MAC) layer of a UE indicates PRACH transmission to the physical layer of the UE, the physical layer of the UE selects one access slot and one signature and transmits a PRACH preamble on UL. The random access procedure is contention-based or contention-free.

Referring to FIG. 2, a UE receives random access information in system information from a BS and stores the random access information. Subsequently, when random access is required, the UE transmits a random access preamble (message 1 or Msg1) to the BS (S21). The random access preamble may also be referred to as an RACH preamble or a PRACH preamble. Upon receipt of the random access preamble from the UE, the BS transmits an RAR (message 2 or Msg2) to the UE (S22). Specifically, DL scheduling information for the RAR may be cyclic redundancy check (CRC)-masked with a random access RNTI (RA-RNTI) and transmitted on an L1/L2 control channel (PDCCH). Upon receipt of the DL scheduling signal masked with the RA-RNTI, the UE may receive the RAR on a PDSCH and decode the RAR. The UE then checks whether the RAR includes RAR information directed to the UE. The UE may determine whether the RAR includes the random access preamble ID (RAID) of the transmitted preamble to check whether the RAR includes RAR information directed to the UE. The RAR includes a timing advance (TA) which is timing offset information for synchronization, radio resource allocation information for UL, and a temporary ID (e.g., temporary cell RNTI (C-RNTI)) for UE identification. Upon receipt of the RAR, the UE performs a UL transmission (message 3 or Msg3) including an RRC Connection Request message on a UL shared channel according to the radio resource allocation information included in the RAR (S23). After receiving the UL transmission from the UE, the BS transmits a message for contention resolution (message 4 or Msg4) to the UE (S24). The message for contention resolution may be referred to as a contention resolution message and include an RRC Connection Setup message. After receiving the contention resolution message from the BS, the UE completes the connection setup and then transmits a Connection Setup Complete message (message 5 or Msg5) to the BS (S25).

In a contention-free random access (CFRA) procedure, before the UE transmits the random access preamble (S21), the BS may allocate a contention-free random access preamble to the UE. The contention-free random access preamble may be allocated by a handover command or dedicated signaling such as a PDCCH. When the contention-free random access preamble is allocated to the UE, the UE may transmit the allocated contention-free random access preamble to the BS in a similar manner to in step S21. Upon receipt of the contention-free random access preamble from the UE, the BS may transmit an RAR to the UE in a similar manner to in step S22.

Radio Frame Structures

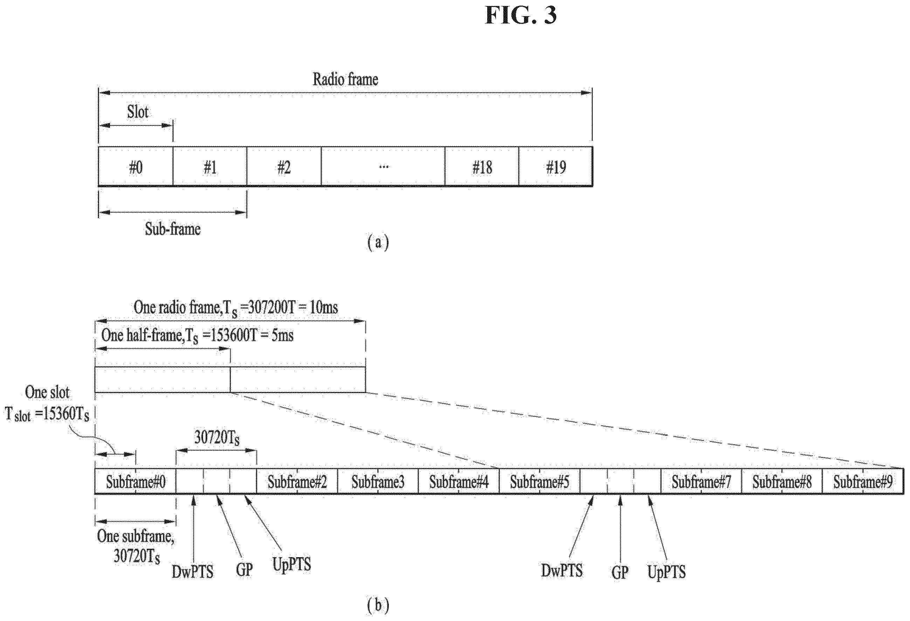

FIG. 3 illustrates LTE radio frame structures. LTE supports frame type 1 for frequency division duplex (FDD), frame type 2 for time division duplex (TDD), and frame type 3 for an unlicensed cell (UCell). Up to 31 secondary cells (SCells) may be aggregated in addition to a primary cell (PCell). Unless otherwise specified, operations described in the disclosure may be applied independently on a cell basis. In multi-cell aggregation, different frame structures may be used for different cells. Further, time resources (e.g., a subframe, a slot, and a subslot) within a frame structure may be generically referred to as a time unit (TU).

FIG. 3(a) illustrates frame type 1. A DL radio frame is defined by 10 1-ms subframes (SFs). A subframe includes 14 or 12 symbols according to a cyclic prefix (CP). In a normal CP case, a subframe includes 14 symbols, and in an extended CP case, a subframe includes 12 symbols. Depending on multiple access schemes, a symbol may be an OFDM(A) symbol or an SC-FDM(A) symbol. For example, a symbol may refer to an OFDM(A) symbol on DL and an SC-FDM(A) symbol on UL. An OFDM(A) symbol may be referred to as a cyclic prefix-OFDMA(A) (CP-OFDM(A)) symbol, and an SC-FMD(A) symbol may be referred to as a discrete Fourier transform-spread-OFDM(A) (DFT-s-OFDM(A)) symbol.

FIG. 3(b) illustrates frame type 2. Frame type 2 includes two half frames. A half frame includes 4 (or 5) general subframes and 1 (or 0) special subframe. According to a UL-DL configuration, a general subframe is used for UL or DL. A subframe includes two slots.

The above-described radio frame structures are merely exemplary, and the number of subframes in a radio frame, the number of slots in a subframe, and the number of symbols in a slot may vary.

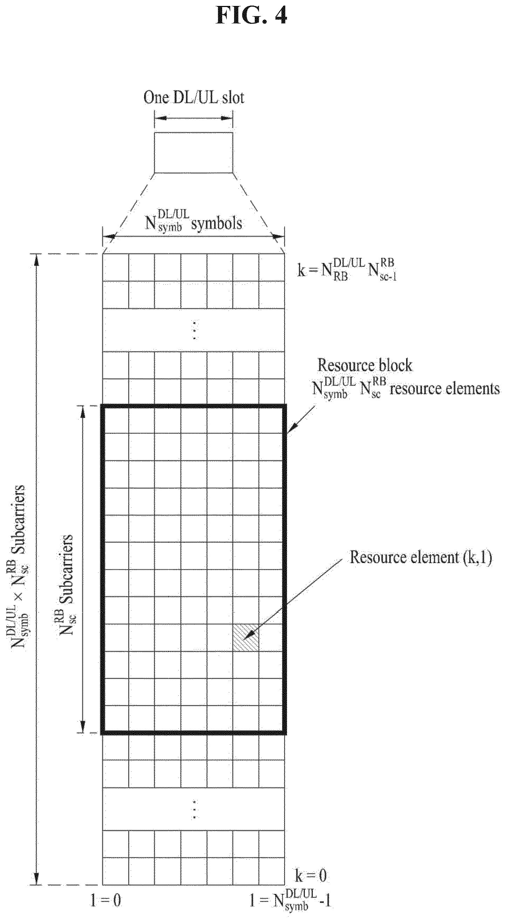

FIG. 4 illustrates a slot structure in an LTE frame.

Referring to FIG. 4, a slot includes a plurality of symbols in the time domain by a plurality of resource blocks (RBs) in the frequency domain. A symbol may refer to a symbol duration. A slot structure may be represented as a resource grid including $N^{DL/UL}_{RB} \times N^{RB}_{sc}$ subcarriers and $N^{DL/UL}_{symb}$ symbols. $N^{DL}_{RB}$ represents the number of RBs in a DL slot, and $N^{UL}_{RB}$ represents the number of RBs in a UL slot. $N^{DL}_{RB}$ and $N^{UL}_{RB}$ are dependent on a DL bandwidth and a UL bandwidth, respectively. $N^{DL}_{symb}$ represents the number of symbols in the DL slot, and $N^{UL}_{symb}$ represents the number of symbols in the UL slot. $N^{RB}_{SC}$ represents the number of subcarriers in one RB. The number of symbols in a slot may vary according to a subcarrier spacing (SCS) and a CP length. For example, one slot includes 7 symbols in the normal CP case, whereas one slot includes 6 symbols in the extended CP case.

An RB is defined as $N^{DL/UL}_{symb}$ (e.g., 7) consecutive symbols in the time domain by $N^{RB}_{sc}$ (e.g., 12) consecutive subcarriers in the frequency domain. The RB may be a physical resource block (PRB) or a virtual resource block (VRB), and PRBs may be mapped to VRBs in a one-to-one correspondence. Two RBs each being located in one of the two slots of a subframe may be referred to as an RB pair. The two RBs of an RB pair may have the same RB number (or RB index). A resource including one symbol by one subcarrier is referred to as a resource element (RE) or tone. Each RE of a resource grid may be uniquely identified by an index pair (k, 1) in a slot where k is a frequency-domain index ranging from 0 to $N^{DL/UL}_{RB} \times N^{RB}_{sc} - 1$ and 1 is a time-domain index ranging from 0 to $N^{DL/UL}_{symb} - 1$.

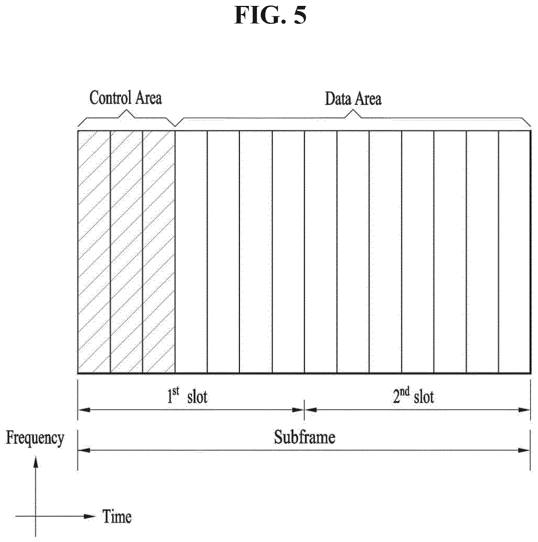

FIG. 5 illustrates a downlink subframe in an LTE system.

Referring to FIG. 5, up to three (or four) OFDM(A) symbols at the beginning of the first slot of a subframe correspond to a control region. The remaining OFDM(A) symbols correspond to a data region in which a PDSCH is allocated, and a basic resource unit of the data region is an RB. DL control channels include physical control format indicator channel (PCFICH), PDCCH, physical hybrid-ARQ indicator channel (PHICH), and so on. The PCFICH is transmitted in the first OFDM symbol of a subframe, conveying information about the number of OFDM symbols used for transmission of control channels in the subframe. The PHICH is a response to a UL transmission, conveying an HARQ ACK/NACK signal. Control information delivered on the PDCCH is called downlink control information (DCI). The DCI includes UL resource allocation information, DL resource control information, or a UL transmit power control command for any UE group.

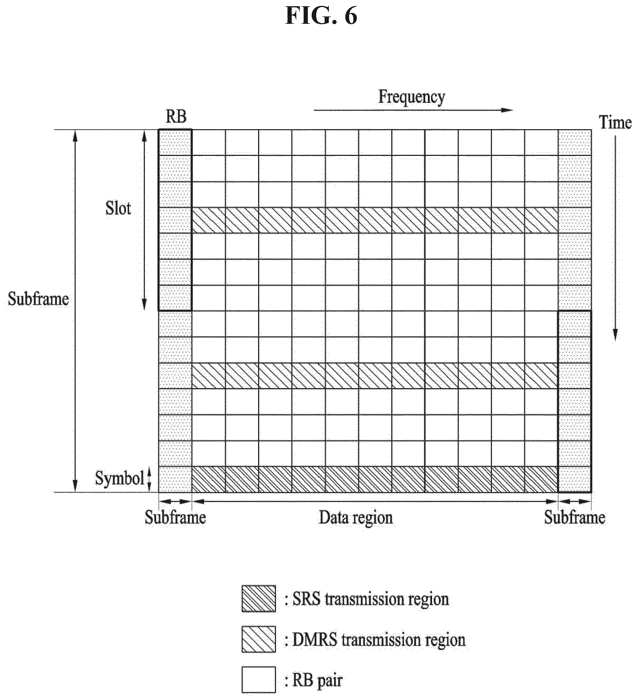

FIG. 6 is an example illustrating an uplink subframe in an LTE system.

Referring to FIG. 6, a subframe includes two 0.5-ms slots. Each slot includes a plurality of symbols, each corresponding to one SC-FDMA symbol. An RB is a resource allocation unit corresponding to 12 subcarriers in the frequency domain by one slot in the time domain. An LTE UL subframe is divided largely into a control region and a data region. The data region is communication resources used for each UE to transmit data such as voice, packets, and so on, including a PUSCH. The control region is communication resources used for each UE to transmit a DL channel quality report, an ACK/NACK for a DL signal, a UL scheduling request, and so on, including a PUCCH. A sounding reference signal (SRS) is transmitted in the last SC-FDMA symbol of a subframe in the time domain.

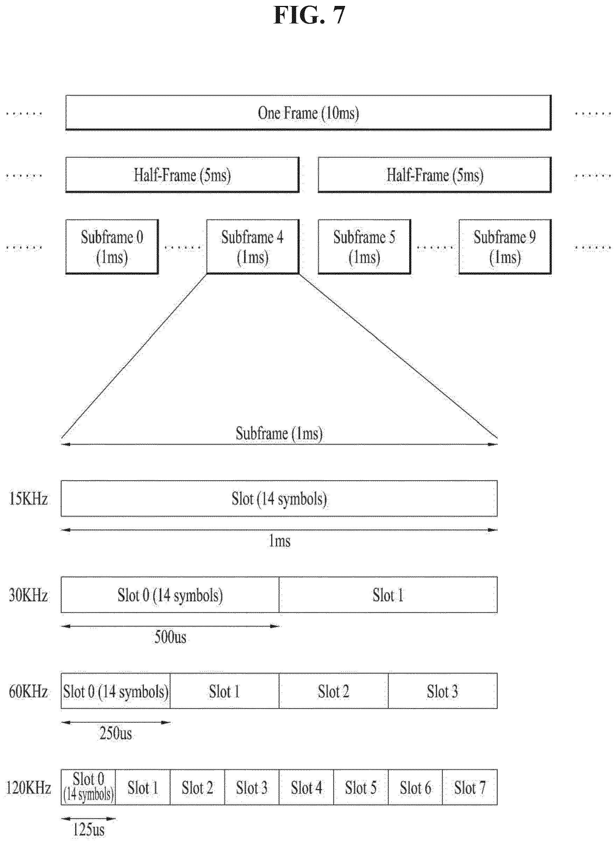

FIG. 7 illustrates a radio frame structure used in an NR system.

In NR, UL and DL transmissions are configured in frames. Each radio frame has a length of 10ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

Table 1 exemplarily illustrates that the number of symbols per slot, the number of slots per frame, and the number of slots per subframe vary according to SCSs in the normal CP case.

[Table 1]

| SCS ($15 \times 2^{\mu}$) | $N_{symb}^{slot}$ | $N_{slot}^{frame,\mu}$ | $N_{slot}^{subframe,\mu}$ |
|---|---|---|---|
| 15KHz ($\mu$=0) | 14 | 10 | 1 |
| 30KHz ($\mu$=1) | 14 | 20 | 2 |
| 60KHz ($\mu$=2) | 14 | 40 | 4 |
| 120KHz ($\mu$=3) | 14 | 80 | 8 |
| 240KHz ($\mu$=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in the extended CP case.

[Table 2]

| SCS ($15 \times 2^{\mu}$) | $N_{symb}^{slot}$ | $N_{slot}^{frame,\mu}$ | $N_{slot}^{subframe,\mu}$ |
|---|---|---|---|
| 60KHz ($\mu$=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a TU) including the same number of symbols may be configured differently for the aggregated cells.

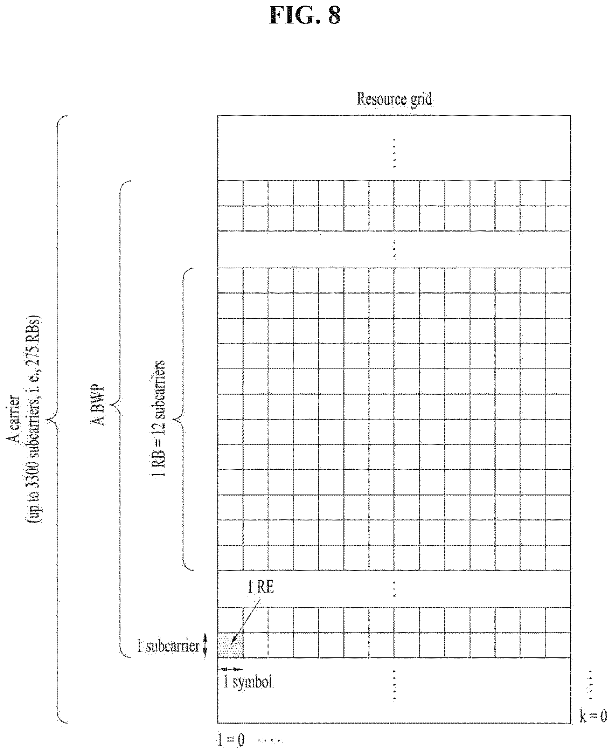

FIG. 8 illustrates a slot structure of an NR frame.

A slot includes a plurality of symbols in the time domain. For example, one slot includes 14 symbols in the normal CP case and 12 symbols in the extended CP case. A carrier includes a plurality of subcarriers in the frequency domain. An RB may be defined by a plurality of (e.g., 12) consecutive subcarriers in the frequency domain. A bandwidth part (BWP) may be defined by a plurality of consecutive (P)RBs in the frequency domain and correspond to one numerology (e.g., SCS, CP length, and so on). A carrier may include up to N (e.g., 5) BWPs. Data communication may be conducted in an active BWP, and only one BWP may be activated for one UE. Each element of a resource grid may be referred to as an RE, to which one complex symbol may be mapped.

**B. UL and DL Channels**

DL Channels

A BS transmits related signals on DL channels to a UE, and the UE receives the related signals on the DL channels from the BS.

(1) Physical Downlink Shared Channel (PDSCH)

The PDSCH delivers DL data (e.g., a DL shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a demodulation reference signal (DMRS) to resources, and transmitted through a corresponding antenna port.

(2) Physical Downlink Control Channel (PDCCH)

The PDCCH delivers DCI and adopts QPSK as a modulation scheme. One PDCCH includes 1, 2, 4, 8, or 16 control channel elements (CCEs) according to its aggregation level (AL). One CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, or the like). A plurality of CORESETs for one UE may overlap with each other in the time/frequency domain. A CORESET may be configured by system information (e.g., a master information block (MIB)) or UE-specific higher-layer signaling (e.g., RRC signaling). Specifically, the number of RBs and the number of symbols (3 at maximum) in the CORESET may be configured by higher-layer signaling.

The UE acquires DCI delivered on the PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling. Each CORESET configuration is associated with one or more search space sets, and each search space set is associated with one CORESET configuration. One search space set is determined based on the following parameters.

-  *controlResourceSetId:* A set of control resources related to the search space set.

-  *monitoringSlotPeriodicityAndOffset:* A PDCCH monitoring periodicity (in slots) and a PDCCH monitoring offset (in slots).

-  *monitoringSymbolsWithinSlot:* A PDCCH monitoring pattern (e.g., the first symbol(s) in a CORESET) in a PDCCH monitoring slot.

-  *nrofCandidates:* The number of PDCCH candidates (one of 0, 1, 2, 3, 4, 5, 6, and 8) for each AL={ 1, 2, 4, 8, 16}.

Table 3 lists exemplary features of each search space type.

[Table 3]

| Type | Search Space | RNTI | Use Case |
|---|---|---|---|
| TypeO-PDCCH | Common | SI-RNTI on a primary cell | SIB Decoding |
| TypeOA-PDCCH | Common | SI-RNTI on a primary cell | SIB Decoding |
| Type1-PDCCH | Common | RA-RNTI orTC-RNTI on a primary cell | Msg2, Msg4 decoding in RACH |

(continued)

| Type | Search Space | RNTI | Use Case |
|---|---|---|---|
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, orCS-RNTI(s) | User specific PDSCH decoding |

Table 4 lists exemplary DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. DCI format 2_0 is used to deliver dynamic slot format information (e.g., a dynamic slot format indicator (SFI)) to a UE, and DCI format 2_1 is used to deliver DL preemption information to a UE. DCI format 2_0 and/or DCI format 2_1 may be delivered to a corresponding group of UEs on a group common PDCCH which is a PDCCH directed to a group of UEs.

UL Channels

A UE transmits related signals on UL channels to a BS, and the BS receives the related signals on the UL channels from the UE.

(1) Physical Uplink Shared Channel (PUSCH)

The PUSCH delivers UL data (e.g., UL shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be scheduled dynamically by a UL grant in DCI, or semi-statically by higher-layer signaling (e.g., RRC signaling) (and/or layer 1 (L1) signaling such as a PDCCH) (configured grant). The PUSCH transmission may be performed in a codebook-based or non-codebook-based manner.

(2) Physical Uplink Control Channel (PUCCH)

The PUCCH delivers UCI, an HARQ ACK, and/or an SR and is classified as a short PUCCH or a long PUCCH according to the transmission duration of the PUCCH. Table 5 lists exemplary PUCCH formats.

[Table 5]

| PUCCH format | Length in OFDM symbols $N_{\text{symb}}^{\text{PUCCH}}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

## C. Machine Type Communication (MTC)

MTC, which is a type of data communication involving one or more machines, may be applied to machine-to-machine (M2M) or Internet of things (IoT). A machine refers to an entity that does not require direct human manipulation or intervention. For example, machines include a smart meter equipped with a mobile communication module, a vending machine, a portable terminal having an MTC function, and so on. For example, services such as meter reading, water level measurement, use of surveillance cameras, and inventory reporting of vending machines may be provided through MTC. MTC has the features of a small amount of transmission data and intermittent UL/DL data transmissions/receptions. Therefore, it is efficient to lower the unit cost of MTC devices and reduce battery consumption in correspondence with low data rates. An MTC device generally has low mobility, and thus MTC is conducted in a channel environment which hardly changes.

The 3GPP has applied MTC since release 10, and MTC may be implemented to satisfy the requirements of low cost and low complexity, coverage enhancement, and low power consumption. For example, 3GPP Release 12 added features for low-cost MTC devices and thus defined UE category 0. A UE category is an indicator indicating the amount of data that a UE may process in a communication modem. A UE of UE category 0 may reduce baseband/radio frequency (RF) complexity by using a reduced peak data rate, a half-duplex operation with relaxed RF requirements, and a single reception (Rx) antenna. In 3GPP Release 12, enhanced MTC (eMTC) was introduced, and the price and power consumption of MTC UEs were further lowered by operating the MTC UEs only at 1.08 MHz (that is, 6 RBs), a minimum frequency bandwidth supported in legacy LTE.

Herein, MTC may be used interchangeably with eMTC, LTE-M1/M2, BL/CE (bandwidth reduced low complexity/coverage enhanced), non-BL UE (in enhanced coverage), NR MTC, enhanced BL/CE, or other equivalent terms. In addition, an MTC UE/device includes a UE/device with MTC functionality (e.g., a smart meter, a bending machine, a mobile UE with MTC functionality).

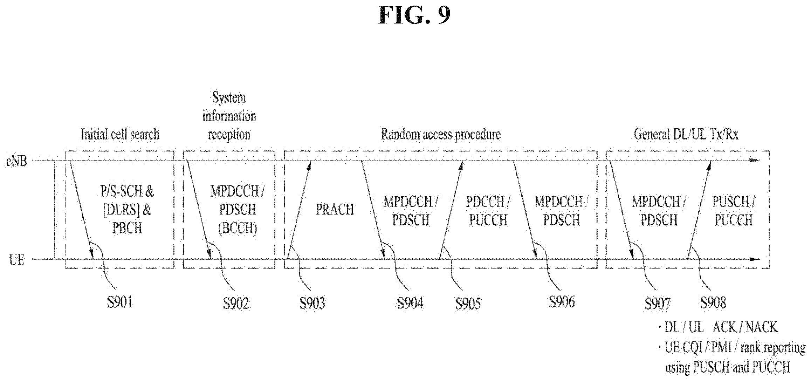

FIG. 9 illustrates physical channels used for MTC and general signal transmission using the same. In a wireless communication system, an MTC UE receives information from a BS in DL, and the UE transmits information to the BS in UL. The information exchanged between the BS and UE includes data and various control information, and various physical channels are used according to the type/usage of the information exchanged therebetween.

When the UE is powered on or enters a new cell, the UE performs initial cell search operation including acquisition of synchronization with the BS (S901). To this end, the UE receives a PSS and an SSS from the BS, synchronizes with the BS, and acquires information such as a cell ID. The PSS/SSS used by the UE for the initial cell search operation may be a PSS/SSS of legacy LTE. Thereafter, the MTC UE may receive a PBCH signal from the BS to obtain intra-cell broadcast information (S902). Meanwhile, the UE may receive a DL RS during the initial cell search and check the state of a DL channel.

After completing the initial cell search, the UE may acquire more specific system information by receiving an MTC PDCCH (MPDCCH) and a PDSCH related thereto in step S902.

Thereafter, the UE may perform a random access procedure to complete access to the BS (S903 to S906). Specifically, the UE may transmit a preamble on a PRACH (S903) and receive an RAR in response to the preamble over a PDCCH and a PDSCH related thereto (S904). Subsequently, the UE may transmit a PUSCH based on scheduling information in the RAR (S905) and perform a contention resolution procedure including reception of as a PDCCH and a PDSCH related thereto (S906).

After performing the above-described procedure, the UE may receive an MPDCCH signal and/or a PDSCH signal (S907) and transmit a PUSCH signal and/or a PUCCH signal (S908) as a general UL/DL signal transmission procedure. Control information transmitted by the UE to the BS is collectively referred to as UCI. The UCI includes a HARQ ACK/NACK, an SR, CSI, and so on. The CSI includes a CQI, a PMI, a RI, and so on.

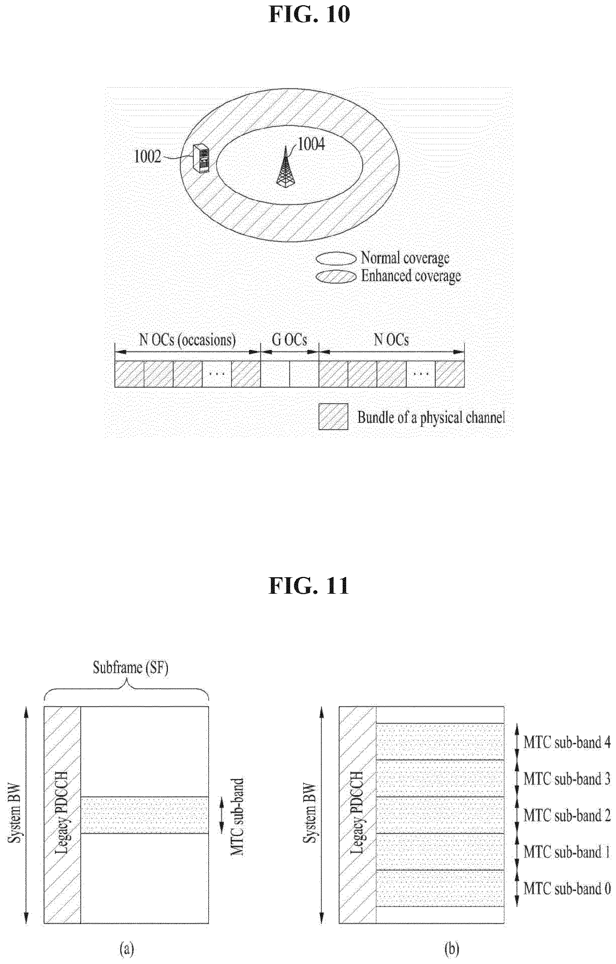

FIG. 10 illustrates cell coverage enhancement in MTC. Coverage enhancement may also be expressed as coverage extension, and a technique for coverage enhancement described in relation to MTC may be applied to NB-IoT and 5G (or NR) in the same/similar manner.

For cell extension or cell enhancement (CE) of a BS 1004 to an MTC device 1002, various CE techniques are under discussion. For example, for CE, the BS/UE may transmit/receive one physical channel/signal in a plurality of occasions (a bundle of physical channels). The physical channel/signal may be repeatedly transmitted/received according to a predefined rule during a bundle interval. A receiver may increase the decoding success rate of the physical channel/signal by decoding some or all of the physical channel/signal bundle. An occasion may mean resources (e.g., time/frequency) in which a physical channel/signal may be transmitted/received. An occasion for a physical channel/signal may include a subframe, a slot, or a symbol set in the time domain. The symbol set may include one or more consecutive OFDM-based symbols. An OFDM-based symbol may include an OFDM(A) symbol and a DFT-s-OFDM(A) (i.e., SC-FDM(A)) symbol. The occasion for a physical channel/signal may include a frequency band or an RB set in the frequency domain. For example, a PBCH, a PRACH, an MTC PDCCH (MPDCCH), a PDSCH, a PUCCH, and a PUSCH may be repeatedly transmitted/received.

MTC supports an operation mode for CE, and a mode supporting repeated transmissions/receptions of a signal for CE may be referred to as a CE mode. The number of repeated transmissions/receptions of a signal for CE may be referred to as a CE level. Table 6 illustrates exemplary CE modes/levels supported in MTC.

[Table 6]

| Mode | Level | Description |
|------|-------|-------------|
| Mode A | Level 1 | No repetition for PRACH |
| | Level 2 | Small Number of Repetition for PRACH |
| Mode B | Level 3 | Medium Number of Repetition for PRACH |
| | Level 4 | Large Number of Repetition for PRACH |

A first mode (e.g., CE Mode A) is defined for small CE, supporting full mobility and CSI feedback, in which no repetition or a small number of repetitions are performed. A first-mode operation may be identical to the operation range of UE category 1. A second mode (e.g., CE Mode B) is defined for UEs in an extremely poor coverage condition, supporting CSI feedback and limited mobility, in which a large number of repeated transmissions are defined. The second mode provides up to 15dB of CE with respect to the range of UE category 1. Each level of MTC is defined differently for a random access procedure (or RACH procedure) and a paging procedure.

FIG. 11 illustrates MTC signal bands.

Referring to FIG. 11, to reduce the unit cost of MTC UEs, MTC may be conducted only in a specific band (or channel band) (MTC subband or narrowband (NB)) of the system bandwidth of a cell, regardless of the system bandwidth of the cell. For example, an MTC UE may perform a UL/DL operation only in a 1.08-MHz frequency band. 1.08 MHz corresponds to six consecutive PRBs in the LTE system, and is defined to enable MTC UEs to follow the same cell search and random access procedures as LTE UEs. FIG. 11(a) illustrates an MTC subband configured at the center of a cell (e.g., center 6 PRBs), and FIG. 11(b) illustrates a plurality of MTC subbands configured within a cell. The plurality of MTC subbands may be configured contiguously/non-contiguously in the frequency domain. Physical channels/signals for MTC may be transmitted and received in one MTC subband. In the NR system, an MTC subband may be defined in consideration of a frequency range and an SCS. In the NR system, for example, the size of an MTC subband may be defined as X consecutive PRBs (i.e., $0.18*X*(2^{\mu})$ MHz bandwidth) (see Table 1 for $\mu$). X may be set to 20 according to the size of a synchronization signal/physical broadcast channel (SS/PBCH) block. In the NR system, MTC may operate in at least one BWP. A plurality of MTC subbands may be configured in a BWP.

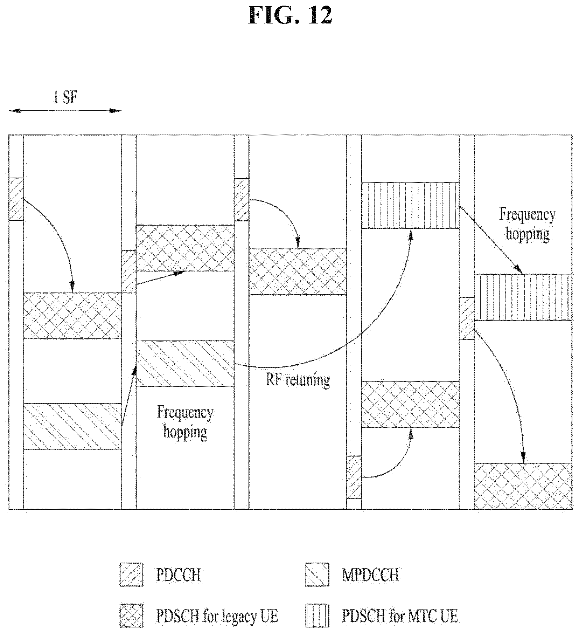

FIG. 12 illustrates scheduling in legacy LTE and MTC.

Referring to FIG. 12, a PDSCH is scheduled by a PDCCH in legacy LTE. Specifically, the PDCCH may be transmitted in the first N OFDM symbols in a subframe (N=1 to 3), and the PDSCH scheduled by the PDCCH is transmitted in the same subframe. In MTC, a PDSCH is scheduled by an MPDCCH. Accordingly, an MTC UE may monitor MPDCCH candidates in a search space within a subframe. The monitoring includes blind decoding of the MPDCCH candidates. The MPDCCH delivers DCI, and the DCI includes UL or DL scheduling information. The MPDCCH is multiplexed with the PDSCH in FDM in a subframe. The MPDCCH is repeatedly transmitted in up to 256 subframes, and the DCI carried in the MPDCCH includes information about an MPDCCH repetition number. In DL scheduling, when the repeated transmissions of the MPDCCH end in subframe #N, transmission of the PDSCH scheduled by the MPDCCH starts in subframe #N+2. The PDSCH may be repeatedly transmitted in up to 2048 subframes. The MPDCCH and the PDSCH may be transmitted in different MTC subbands. In UL scheduling, when the repeated transmissions of the MPDCCH end in subframe #N, transmission of a PUSCH scheduled by the MPDCCH starts in subframe #N+4. For example, when the PDSCH is repeatedly transmitted in 32 subframes, the PDSCH may be transmitted in the first 16 subframes in a first MTC subband, and in the remaining 16 subframes in a second MTC subband. MTC operates in a half-duplex mode. MTC HARQ retransmission is adaptive and asynchronous.

## D. Narrowband Internet of Things (NB-IoT)

NB-IoT is a narrowband Internet of things technology supporting a low-power wide area network through an existing wireless communication system (e.g., LTE or NR). Further, NB-IoT may refer to a system supporting low complexity and low power consumption in a narrowband (NB). Since an NB-IoT system uses the same OFDM parameters as those of an existing system, such as an SCS, there is no need to allocate an additional band separately for the NB-IoT system. For example, one PRB of an existing system band may be allocated for NB-IoT. Considering that an NB-IoT UE perceives a single PRB as a carrier, PRB and carrier may be interpreted as the same meaning in the description of NB-IoT.

NB-IoT may operate in a multi-carrier mode. In NB-IoT, a carrier may be defined as an anchor type carrier (i.e., anchor carrier or anchor PRB) or a non-anchor type carrier (i.e., non-anchor carrier or non-anchor PRB). From the perspective of a BS, the anchor carrier may mean a carrier carrying a narrowband PSS (NPSS), a narrowband SSS (NSSS), and a narrowband PBCH (NPBCH) for initial access, and a narrowband PDSCH (NPDSCH) for a narrowband system information block (N-SIB). That is, in NB-IoT, a carrier for initial access may be referred to as an anchor carrier, and the other carrier(s) may be referred to as non-anchor carrier(s). One or more anchor carriers may exist in the system.

While NB-IoT is described mainly in the context of being applied to the legacy LTE system in the present disclosure, the description may be extended to a next-generation system (e.g., NR system). In the present disclosure, the description of NB-IoT may be extended to MTC serving a similar technical purpose (e.g., low-power, low-cost, and CE). The term NB-IoT may be replaced with other equivalent terms such as NB-LTE, NB-IoT enhancement, enhanced NB-IoT, further enhanced NB-IoT, and NB-NR

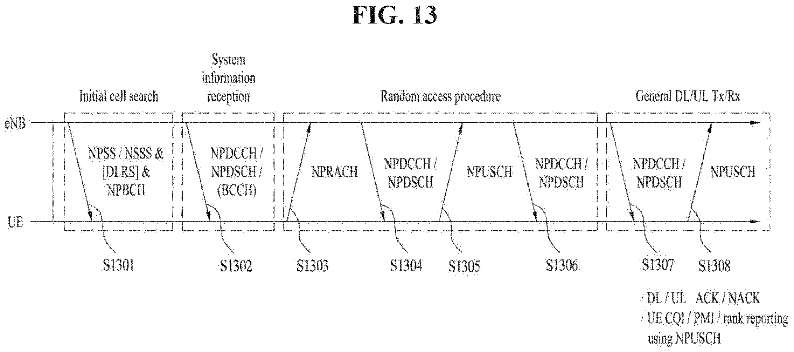

FIG. 13 illustrates physical channels used for NB-IoT and general signal transmission using the same. In a wireless communication system, a UE receives information from a BS in DL, and the UE transmits information to the BS in UL. The information exchanged between the BS and UE includes data and various control information, and various physical channels are used according to the type/usage of the information exchanged therebetween.

When the UE is powered on or enters a new cell, the UE performs initial cell search operation including acquisition of synchronization with the BS (S1301). To this end, the UE receives an NPSS and an NSSS from the BS, synchronizes with the BS, and acquires information such as a cell ID. The PSS/SSS used by the UE for the initial cell search operation may be a PSS/SSS of legacy LTE. Thereafter, the MTC UE may receive an NPBCH signal from the BS to obtain intra-cell broadcast information (S1302). Meanwhile, the UE may receive a DL RS during the initial cell search and check the state of a DL channel.

After completing the initial cell search, the UE may acquire more specific system information by receiving a narrowband PDCCH (NPDCCH) and an NPDSCH related thereto in step S1302.

Thereafter, the UE may perform a random access procedure to complete access to the BS (S1303 to S1306). Specifically, the UE may transmit a preamble on a narrowband PRACH (NPRACH) (S1303) and receive an RAR in response to the preamble over an NPDCCH and an NPDSCH related thereto (S1304). Subsequently, the UE may transmit a narrowband PUSCH (NPUSCH) based on scheduling information in the RAR (S1305) and perform a contention resolution procedure including reception of as an NPDCCH and an NPDCCH related thereto (S1306).

After performing the above-described procedure, the UE may receive an NPDCCH signal and/or an NPDSCH signal (S1307) and transmit an NPUSCH (S1308) as a general UL/DL signal transmission procedure. Control information transmitted by the UE to the BS is collectively referred to as UCI. The UCI includes a HARQ ACK/NACK, an SR, CSI, and so on. The CSI includes a CQI, a PMI, a RI, and so on. In NB-IoT, UCI is transmitted over a NPUSCH. The UE may transmit the UCI over the NPUSCH periodically, aperiodically, or semi-persistently according to the request/instruction from a network (e.g., BS), the UE may periodically, aperiodically, or semi-persistently transmit UCI through the NPUSCH.

The structure of a NB-IoT frame may vary depending on SCSs. For example, the NB-IoT system may support an SCS of 15 kHz and an SCS of 3.75 kHz. However, the NB-IoT frame structure is not limited thereto, and other SCSs (e.g., 30 kHz, etc.) may also be considered for NB-IoT based on different time/frequency units. In addition, although the present disclosure describes the NB-IoT frame structure based on the LTE system frame structure, this is only for convenience of description, and the present disclosure is not limited thereto. Thus, it is apparent that methods proposed in the present disclosure are applicable to NB-IoT based on frame structures of next-generation systems (e.g., NR system).

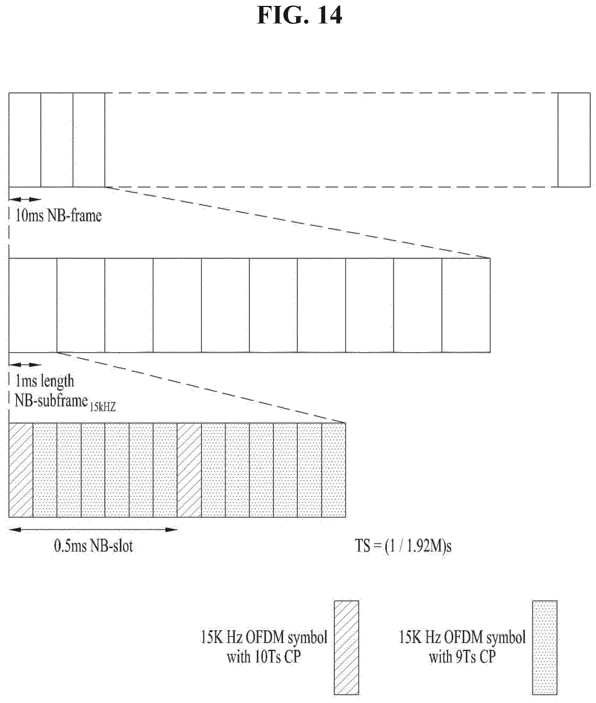

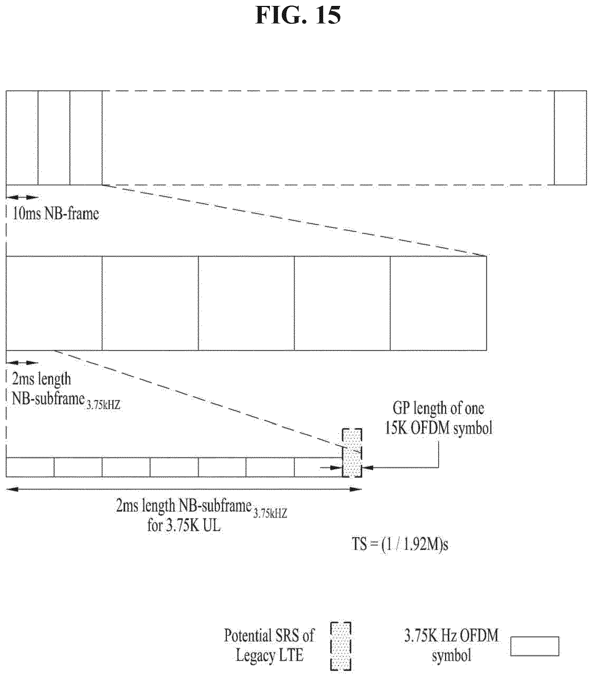

FIG. 14 illustrates a frame structure in an SCS of 15 kHz, and FIG. 15 illustrates a frame structure in an SCS of 3.75 kHz.

Referring to FIG. 14, an NB-IoT frame structure for the 15 kHz SCS may be configured to be identical to the frame structure of the above-described legacy system (i.e., LTE system). That is, a 10-ms NB-IoT frame may include 10 1-ms NB-IoT subframes, each including two 0.5-ms NB-IoT slots. Each 0.5-ms NB-IoT slot may include 7 OFDM symbols.

Referring to FIG. 15, for the 3.75 kHz SCS, a 10-ms NB-IoT frame includes 5 2-ms NB-IoT subframes, each including 7 OFDM symbols and one guard period (GP). A 2-ms NB-IoT subframe may also be referred to as an NB-IoT slot or an NB-IoT resource unit (RU).

NB-IoT DL physical resources may be configured based on the configuration of physical resources in another wireless communication system (e.g., LTE or NR), except that an NR system bandwidth is a certain number of RBs (e.g., one RB, i.e., 180 kHz). For example, when the NB-IoT DL supports only the 15 kHz SCS, the NB-IoT DL physical resources may be configured as the resource area of one RB (i.e., one PRB) in the frequency domain, to which the resource grid of the LTE system illustrated in FIG. 4 is limited, as described above. Likewise, for NB-IoT UL physical resources, the system bandwidth may be limited to one RB.

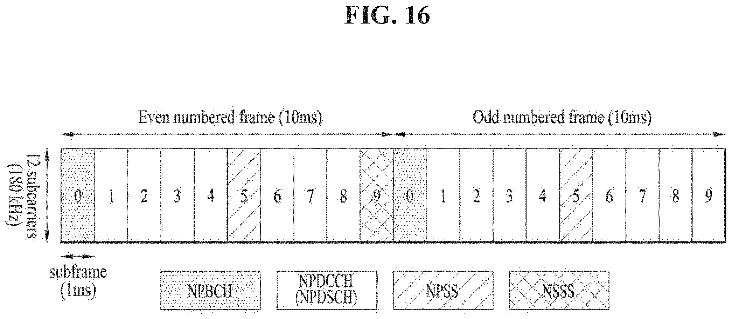

FIG. 16 illustrates transmission of NB-IoT DL physical channels/signals. An NB-IoT DL physical channel/signal is transmitted in one PRB and supports the 15 kHz SCS/multi-tone transmission.

Referring to FIG. 16, the NPSS is transmitted in the sixth subframe of every frame, and the NSSS is transmitted in the last (e.g., tenth) subframe of every even-numbered frame. A UE may acquire frequency, symbol, and frame synchronization using the synchronization signals (NPSS and NSSS) and search 504 physical cell IDs (PCIDs) (i.e., BS IDs). The NPBCH is transmitted in the first subframe of every frame, carrying an NB-MIB. The NRS is provided as an RS for DL physical channel demodulation and generated in the same manner as in LTE. However, an NB-PCID (NCell ID or NB-IoT BS ID) is used as an initialization value for generation of an NRS sequence. The NRS is transmitted through one or two antenna ports. The NPDCCH and the NPDSCH may be transmitted in the remaining subframes except for the subframes carrying the NPSS, the NSSS, and the NPBCH. The NPDCCH and the NPDSCH may not be transmitted in the same subframe. The NPDCCH carries DCI, and the DCI supports three types of DCI formats. DCI format N0 includes NPUSCH scheduling information, and DCI formats N1 and N2 include NPDSCH scheduling information. The NPDCCH may be transmitted up to 2048 times, for CE. The NPDSCH is used to transmit data (e.g., TB) of a transport channel such as a DL-SCH and a paging channel (PCH). A maximum TB size (TBS) is 680 bits, and a TB may be repeatedly transmitted up to 2048 times, for CE.

NB-IoT UL physical channels include narrowband PRACH (NPRACH) and NPUSCH, and support single-tone transmission and multi-tone transmission. Single-tone transmission is supported for the SCSs of 3.5 kHz and 15 kHz, and multi-tone transmission is supported only for the 15 kHz SCS.

SC-FDMA may be applied to NB-IoT UL based on the SCS of 15 kHz or 3.75 kHz. Multi-tone transmission and single-tone transmission may be supported for the NB-IoT UL. For example, multi-tone transmission is supported only for the 15 kHz SCS, and single-tone transmission may be supported for the SCSs of 15 kHz and 3.75 kHz.

As mentioned in relation to the NB-IoT DL, the physical channels of the NB-IoT system may have names added with "N (Narrowband)" to distinguish them from the channels of the existing systems. For example, the NB-IoT UL physical channels may include NPRACH, NPUSCH, and so on, and the NB-IoT UL physical signals may include narrowband DMRS (NDMRS).

The NPUSCH may be configured in NPUSCH format 1 or NPUSCH format 2. For example, NPUSCH format 1 may be used to carry (or deliver) a UL-SCH, and NPUSCH format 2 may be used to transmit UCI such as an HARQ ACK.

Characteristically, the UL channel of the NB-IoT system, NPRACH may be repeatedly transmitted, for CE. In this case, frequency hopping may be applied to the repeated transmissions.


### E. Symbols, Abbreviations, and Terms

The following symbols/abbreviations/terms are used in this document.

- PDCCH: PDCCH is the abbreviation of Physical Downlink Control Channel. The PDCCH refers to a physical layer communication channel for providing DL control information. The methods proposed in the present disclosure are applicable to various PDCCH structures such as an enhanced-PDCCH (EPDCCH), an MPDCCH, and an NPDCCH even unless otherwise specified. In this document, the PDCCH is used as a term representing various PDCCH structures unless stated otherwise.
- PUCCH: PUCCH is the abbreviation of Physical Uplink Control Channel. The PUCCH refers to a physical layer communication channel for providing UL control information. The methods proposed in the present disclosure are applicable to various PUCCH structures even unless otherwise specified. In this document, the PUCCH is used as a term representing various PUCCH structures unless stated otherwise.

- PDSCH: PDSCH is the abbreviation of Physical Downlink Shared Channel. The PDSCH refers to a physical layer communication channel for providing DL data. The methods proposed in the present disclosure are applicable to various PDSCH structures such as an NPDSCH even unless otherwise specified. In this document, the PDSCH is used as a term representing various PDSCH structures unless stated otherwise.
- PUSCH: PUSCH is the abbreviation of Physical Uplink Shared Channel. The PUSCH refers to a physical layer communication channel for providing UL data. The methods proposed in the present disclosure are applicable to various PUSCH structures such as an NPUSCH even unless otherwise specified. In this document, the PUSCH is used as a term representing various PUSCH structures unless stated otherwise.
- DCI: DCI is the abbreviation of Downlink Control Information.
- UCI: UCI is the abbreviation of Uplink Control Information.
- NDI: NDI is the abbreviation of New Data Indicator. The NDI may be included in DCI (transmitted over a PDCCH). The NDI may indicate whether new data is transmitted or received on a PDSCH/PUSCH scheduled by DCI or previous data is retransmitted.
- CB: CB is the abbreviation of Code Block.
- CBG: CBG is the abbreviation of Code Block Group.
- TB: TB is the abbreviation of Transport Block.
- TBS: TBS is the abbreviation of Transport Block Size.
- MCS: MCS is the abbreviation of Modulation and Coding Scheme.
- SF: SF is the abbreviation of Subframe.
- RE: RE is the abbreviation of Resource Element.
- RB: RB is the abbreviation of Resource Block.
- HARQ: HARQ is the abbreviation of Hybrid Automatic Repeat reQuest.
- SIB: SIB is the abbreviation of System Information Block.
- LAA: LAA is the abbreviation of Licensed Assisted Access. A band defined in the LTE/LTE-A/LTE-A Pro/5G/NR system is referred to as a licensed band, and a band undefined in the LTE/LTE-A/LTE-A Pro/5G/NR system such as a Wi-Fi band or a Bluetooth (BT) band is referred to as an unlicensed band. Operation in the unlicensed band is referred to as the LAA.
- Scheduling delay: The scheduling delay refers to a gap between the last transmission position (e.g., SF or slot) of a PDCCH dynamically scheduled by DCI and the start transmission position (e.g., SF or slot) of a scheduled TB (PUSCH or PDSCH).
- FH: FH is the abbreviation of Frequency Hopping. An FH indicator means a DCI field for indicating the FH, and FH indication information means information representing whether the FH is enabled/disabled.
- RA: RA is the abbreviation of Resource Assignment.
- RV: RV is the abbreviation of Redundancy Version.
- UL: UL is the abbreviation of Uplink.
- DL: DL is the abbreviation of Downlink.
- HD-FDD: HD-FDD is the abbreviation of Half Duplex Frequency Division Duplex.
- FD-FDD: FD-FDD is the abbreviation of Full Duplex Frequency Division Duplex.
- TDD: TDD is the abbreviation of Time Division Duplex.
- $k0$: $k0$ denotes a scheduling delay between a DCI reception time (e.g., subframe) and a UL or DL transmission time (e.g., subframe) scheduled by DCI in the NB-IoT system.

### F. Proposed Methods

### F.1. Technical Problem

In communication systems such as LTE and NR, one DCI is generally used to schedule one PDSCH or PUSCH (single-TB scheduling) However, if the size of transmitted data is larger than the size of the TBS capable of being transmitted at one time over the PDSCH/PUSCH or if continuous PDSCH/PUSCH transmission is required due to periodic data transmission, it may cause an increase in network overhead from the point of view of the BS because PDCCH transmission is repeated. In addition, from the point of view of the UE, power consumption may increase because PDCCH monitoring is repeated. In LTE, a structure for controlling transmission of a plurality of PUSCHs through one DCI in the LAA communication system has been proposed. In this structure, the BS may schedule transmission of PUSCHs corresponding to up to four HARQ processes through one DCI, and thus it has an advantage that the UE may transmit multiple PUSCHs by performing PDCCH monitoring once. However, in some cases, such a DCI design method introduced for the LAA may generate unnecessary bits that are not used, which may cause performance degradation due to an unnecessary increase in the code rate during DCI decoding. When a plurality of TBs or HARQ processes are to be scheduled, in general, the UE needs to acquire DCI scheduling each TB or HARQ process by monitoring a plurality of different search spaces. However, continuous PDSCH/PUSCH transmission may be required when the size of transmitted data is larger than a TBS capable of being transmitted at once over the PDSCH/PUSCH or when periodic data transmission is required. In this case, from the perspective of the BS, network overhead may increase due to repetitive PDCCH transmission, and from the perspective of the UE, power consumption may increase due to repetitive PDCCH monitoring. To solve these problems, a multi-TB scheduling or multiple-TB scheduling structure for scheduling a plurality of TBs with one DCI may be considered. The multi-TB scheduling structure has the advantage of reducing the network overhead caused by the repetitive PDCCH transmission. From the point of view of the UE, the multi-TB scheduling structure may reduce the power consumption required for additional DCI detection. In LTE, a multi-SF scheduling or multiple-SF scheduling structure capable of controlling transmission of a plurality of PUSCHs with one DCI in the LAA communication structure has been proposed. According this structure, the BS may schedule PUSCH transmission corresponding to up to four HARQ processes with one DCI, and the UE may transmit a plurality of PUSCHs by performing PDCCH monitoring only once. Similarly, a multi-TB scheduling technique for scheduling a plurality of TBs with one DCI is being discussed in current Rel-16 NB-IoT/MTC.

When PDSCH transmission is scheduled by DCI, the UE may perform HARQ-ACK feedback operation to report to the BS whether decoding of the corresponding PDSCH is successful. In the conventional single-TB scheduling method, the transmission time of HARQ-ACK feedback for a TB scheduled by DCI is determined based on the time when transmission of the corresponding TB is completed. For example, in MTC, HARQ-ACK transmission for a PDSCH completely transmitted in subframe n-4 may be performed in subframe n. In NB-IoT, when NPDSCH transmission is completed in subframe n, HARQ-ACK transmission may be started after subframe n+k0-1 based on the value of kO scheduled by DCI. In this case, the delay between a transmitted TB and a HARQ-ACK feedback channel may be used to ensure the time required until the UE completes decoding of the TB and prepares for UL transmission..

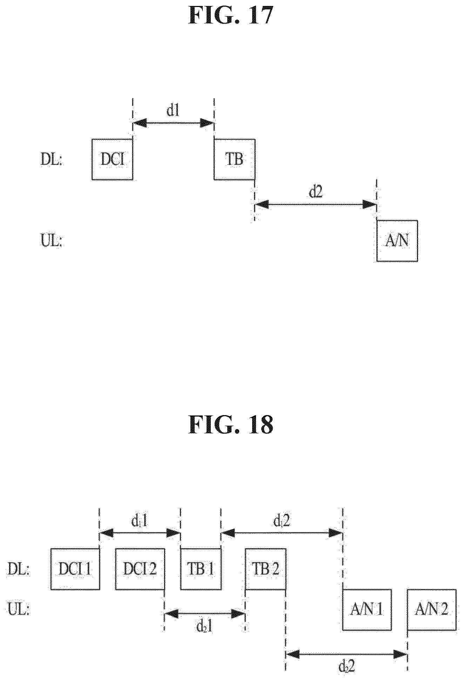

FIG. 17 schematically illustrates an exemplary relationship between DCI, a TB, and HARQ-ACK feedback in the time domain when DL TB transmission is scheduled by the DCI. In the example of FIG. 17, d1 denotes a scheduling delay between a PDCCH carrying the DCI and a PDSCH carrying the TB, and d2 denotes a scheduling delay between the PDSCH carrying the TB and the HARQ-ACK feedback channel carrying ACK/NACK (A/N) information.

When the UE has capability of multiple HARQ processes, if the UE expects DCI based on the single-TB scheduling method, the UE may receive one or more DCIs sequentially transmitted and be scheduled with TBs scheduled by the DCIs. In this case, if HARQ-ACK feedback is transmitted independently for each TB without bundling or multiplexing, the transmission time of each HARQ-ACK feedback channel may be determined based on the time when transmission of the corresponding TB is completed. FIG. 18 schematically illustrates a relationship between transmission of each DCI, transmission of each scheduled TB, and transmission of HARQ-ACK feedback for each TB in the time domain when a plurality of TBs are scheduled by multiple single-TB scheduling DCIs.

When the multi-TB scheduling or multiple-TB scheduling method is introduced, scheduling delays between one or more TBs scheduled by one DCI and HARQ-ACK feedback channels related thereto may be determined in a different way from the conventional scheduling delay determination method. For example, in the HD-FDD structure where UL and DL transmission and reception are not performed at the same time, it may be considered that a scheduling delay between HARQ-ACK feedback transmission start times is designated based on the time when transmission of all TBs scheduled by one DCI is completed.

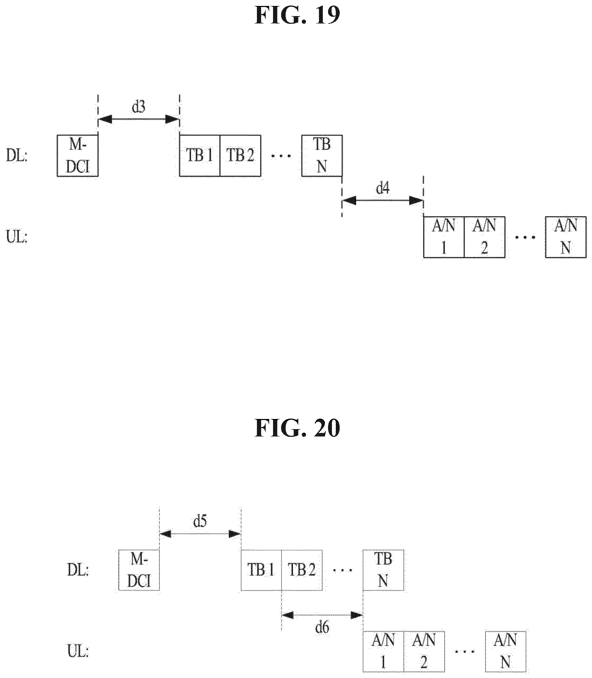

FIG. 19 schematically illustrates an example in which the above-described scheduling delay designation method is applied when multi-TB scheduling is performed. In the example of FIG. 19, d3 denotes a scheduling delay between a multi-TB scheduling DCI and the time when transmission of scheduled TBs starts, and d4 denotes a scheduling delay between the time when transmission of all N scheduled TBs are completed and the time when transmission of first HARQ-ACK feedback starts. When the scheduling delay designation method is employed, multiple HARQ-ACK feedback transmission times may be determined by one scheduling delay. If the scheduling delay is configured by DCI, DCI overhead may be reduced. In addition, since HARQ-ACK feedback is transmitted after transmission of all TBs is completed, there is an advantage that the TB transmission period and the HARQ-ACK feedback transmission period do not collide with each other.

To determine a scheduling delay when the multi-TB scheduling method is introduced, in the FD-FDD structure where UL and DL transmission and reception are performed simultaneously or the TDD structure where UL and DL transmissions are performed alternately, it may be considered that a scheduling delay between HARQ-ACK feedback transmission start times is designated based on the time when transmission of one specific TB among TBs scheduled by one DCI is completed.

FIG. 20 schematically illustrates an example in which the scheduling delay designation method is applied when multi-TB scheduling is performed. In the example of FIG. 20, d5 denotes a scheduling delay between a multi-TB scheduling DCI and the time when transmission of scheduled TBs starts, and d6 denotes a scheduling delay between the time when transmission of the first TB among N scheduled TBs is completed and the time when transmission of HARQ-ACK feedback for the first TB starts. When the scheduling delay configuration method is used, HARQ-ACK feedback transmission may be completed quickly compared to the method used in the example of FIG. 19.

In general, when the scheduling delay increases, the time required for the UE to complete the TB transmission/reception procedure increases, and thus the transfer rate (throughput) may decrease. Therefore, to reduce unnecessary delays, a method of determining scheduling delays differentially depending on situations may be considered.

In the above descriptions, a scheduling delay required between TBs and HARQ-ACK feedback channels when a plurality of TBs are scheduled may be different from a scheduling delay required between a TB and a HARQ-ACK feedback channel when a single TB is scheduled. When one TB is scheduled, a minimum time is required for the UE to complete decoding of the received TB and prepare for HARQ-ACK feedback transmission as described in the single-TB scheduling method, and a scheduling delay between the TB and HARQ-ACK feedback may be configured to ensure the minimum time. On the other hand, when a plurality of TBs are scheduled, transmission of a specific TB may be completed before transmission of another TB. For TBs where scheduled transmission is completed, decoding and HARQ-ACK feedback preparation therefor may start before transmission of all scheduled TBs is completed. For example, comparing the examples of FIGS. 17 and 19, the magnitude of d2 needs to be configured so that the time required for the UE to decode the TB and prepare the HARQ-ACK feedback is guaranteed in FIG. 17, and d4 may be configured smaller than d1 in FIG. 19 because decoding and HARQ-ACK feedback preparation for TB1 may start at the time when reception of TB1 is completed.

In the above descriptions, different HARQ-ACK delay application methods may be applied depending on how the UE performs transmission/reception. For example, different scheduling delay conditions may be configured depending on which duplex state among the FD-FDD, HD-FDD, and TDD is applied. In this case, the scheduling delay conditions may be differentiated depending on how the location of a reference TB, which is used to determine the transmission start time of HARQ-ACK feedback, is determined. Alternatively, the scheduling delay itself may vary. This is because the capability of processing transmission and reception varies depending on the duplex state supported by the UE, and thus each duplex mode has a suitable scheduling delay configuration method.

Herein, a delay from when transmission of all TBs where a scheduling delay for determining the transmission time of HARQ-ACK feedback is scheduled is completed until when HARQ-ACK feedback transmission starts is named HARQ-ACK-delay-E. For example, d2 of FIG. 17 and d4 of FIG. 19 may belong to the category of the HARQ-ACK-delay-E proposed in the present disclosure. In addition, a delay from when transmission of a specific one TB among TBs where a scheduling delay for determining the transmission time of HARQ-ACK feedback is scheduled is completed until when HARQ-ACK feedback transmission starts is named HARQ-ACK-delay-S. For example, d6 of FIG. 20 may belong to the category of the HARQ-ACK-delay-S proposed in the present disclosure. Further, HARQ-ACK delay is defined as a general term for representing the scheduling delay between a TB and HARQ-ACK feedback including both the HARQ-ACK-delay-E and HARQ-ACK-delay-S.

To this end, the present disclosure proposes a method in which the HARQ-ACK-delay-E or HARQ-ACK-delay-S is determined according to the configuration of the BS when the multi-TB scheduling method is used. Specifically, the configuration may correspond to information semi-statically configured by higher layer signaling such as SIB or RRC or information dynamically configured by DCI.

The methods proposed in the present disclosure may be applied to multi-TB scheduling capable of controlling transmission of one or more TBs with one DCI in MTC and NB-IoT operating in the LTE system. The MTC and NB-IoT are technologies that require low complexity and wide coverage of the UE. The MTC and NB-IoT may reduce the size of an unnecessary gap, thereby improving resource efficiency from the perspective of the network and reducing unnecessary power consumption of the UE. Alternatively, the methods proposed in the present disclosure may be applied to multiple-SF scheduling for scheduling transmission of one or more PUSCHs with one DCI as in the LAA technology operating in the LTE system. In addition, since the unlicensed band (U-band) technology discussed in the NR system has similarities to the LAA technology of the LTE system, the same problem-solving approach may be considered. Specifically, a multi-TTI scheduling or multiple-TTI scheduling technology for scheduling one or more TBs for each slot with one DCI is being discussed in the U-band technology. In the NR system, a multi-slot scheduling or multiple-slot scheduling technology for scheduling one or more PDSCHs/PUSCHs with one DCI is being discussed as a candidate technology for UE power saving. The multi-slot scheduling may increase the power saving effect by reducing the unnecessary waiting time of the UE. In addition to the exemplary technologies to which the proposed methods are applicable, the method for adaptively determining a HARQ-ACK delay may be applied to general communication systems as long as the principles of the present disclosure are maintained.

### F.2. Proposed Methods

As an example to which the methods proposed in the present disclosure are applied, a multi-TB scheduling or multiple-TB scheduling method for dynamically scheduling one or more TBs with one DCI in a communication system such as LTE and NR may be considered. Here, the TB is a term for describing a unit in which transmission is performed, and the TB may be substituted with a proper transmission unit (e.g., CB, CBG, subframe, slot, symbol, RE, RB, HARQ process, etc.) for performing scheduling in applied technologies.

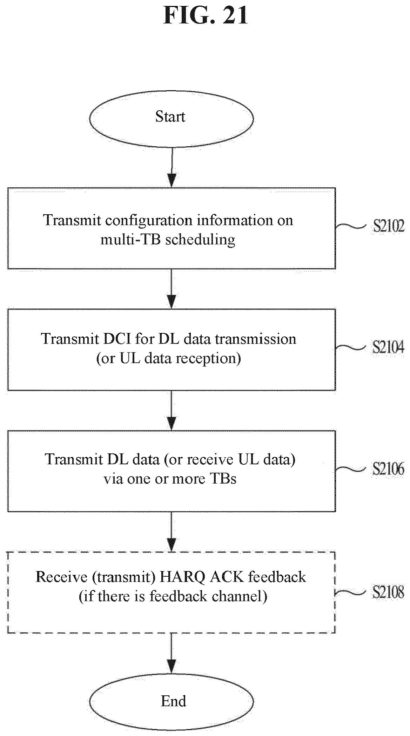

FIG. 21 illustrates BS operations to which the methods proposed in the present disclosure are applicable. The example of FIG. 21 is for illustration only, and the methods proposed in the present disclosure may be applied without limitation to the example of FIG. 21. For example, even if some operations of FIG. 21 are omitted, the methods proposed in the present disclosure may be applied. On the contrary, even if an operation not illustrated in FIG. 21 is included, the methods proposed in the present disclosure may be applied.

Referring to FIG. 21, to support the multi-TB scheduling method, the BS may signal (or transmit) to the UE configuration information about multi-TB scheduling (e.g., information indicating that the multi-TB scheduling is supported and/or information indicating related parameters) (S2102). For example, the signaling may be information configured by higher layer signaling such as SIB or RRC signaling or information dynamically configured by DCI. Thereafter, if the BS has data to transmit to the UE or data to receive from the UE, the BS may transmit DCI scheduling (transmission/reception of) one or more TBs (DCI for DL data transmission or DCI for UL data reception) to the UE (S2104). If the BS has data to transmit, the BS performs DL data transmission (via one or more TBs) after DCI transmission is completed (S2104). If a HARQ-ACK feedback channel is required (for the TBs or DL data), the BS performs an operation for receiving the HARQ-ACK feedback channel (S2108). If the BS has data to receive, the BS performs UL data reception (via one or more TBs) after DCI transmission is completed (S2104). If a HARQ-ACK feedback channel is required (for the TBs or UL data), the BS performs an operation for transmitting the HARQ-ACK feedback channel (S2108). When no HARQ-ACK feedback is required, the BS may drop transmission/reception of the HARQ-ACK feedback channel (S2108).

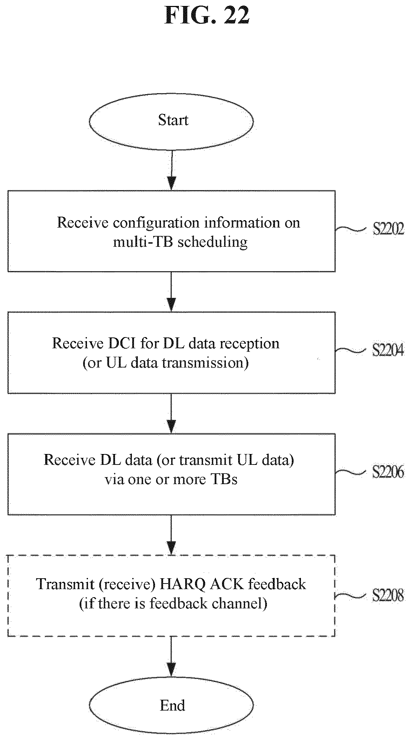

FIG. 22 illustrates UE operations to which the methods proposed in the present disclosure are applicable. The example of FIG. 22 is for illustration only, and the methods proposed in the present disclosure may be applied without limitation to the example of FIG. 22. For example, even if some operations of FIG. 22 are omitted, the methods proposed in the present disclosure may be applied. On the contrary, even if an operation not illustrated in FIG. 22 is included, the methods proposed in the present disclosure may be applied.

When the UE receives signaling including configuration information about multi-TB scheduling (e.g., information indicating that the multi-TB scheduling is supported and/or information indicating related parameters) (S2202), the UE may monitor DCI for scheduling one or more TBs (or DCI for multi-TB scheduling) (S2204). For example, the signaling may be information configured by higher layer signaling such as SIB or RRC signaling or information dynamically configured by DCI. Thereafter, if the UE detects/receives the DCI for scheduling one or more TBs (or the DCI for multi-TB scheduling) (S2204), the UE determines the transmission/reception locations of the TBs based on the signaling and the information scheduled by the DCI. If the UE has data to receive, the UE performs DL data reception (via the one or more TBs) after the DCI reception is completed (S2206). If a HARQ-ACK feedback channel is required (for the TBs or DL data), the UE may perform an operation for transmitting the HARQ-ACK feedback channel (S2208). If the UE has data to transmit, the UE performs UL data transmission (via the one or more TBs) after the DCI reception is completed (S2206). If a HARQ-ACK feedback channel is required (for the TBs or UL data), the UE may perform an operation for receiving the HARQ-ACK feedback channel (S2208).

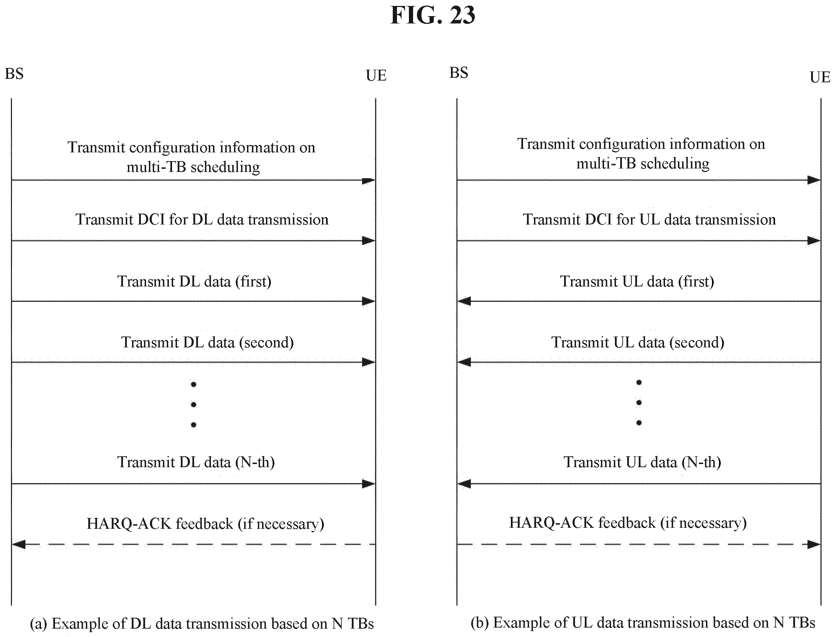

FIG. 23 schematically illustrates a transmission/reception process between a BS and a UE.

In the examples of FIGS. 21 to 23, if the system supports MTC, DCI may be transmitted/received over an MPDCCH (S2104 or S2204), UL data may be transmitted/received at least once over a PUSCH (S2106 or S2206), DL data may be transmitted/received at least once over a PDSCH (S2106 or S2206), and HARQ-ACK feedback may be transmitted/received at least once over a PUCCH (S2108 or S2208) (see C. MTC (Machine Type Communication)). In the examples of FIGS. 21 to 23, if the system supports NB-IoT, DCI may be transmitted/received over an NPDCCH (S2104 or S2204), UL data may be transmitted/received at least once over an NPUSCH (S2106 or S2206), DL data may be transmitted/received at least once over an NPDSCH (S2106 or S2206), and HARQ-ACK feedback may be transmitted/received at least once over an NPUSCH (S2108 or S2208) (see D. NB-IoT (Narrowband-Internet of Things)). The NPDCCH and MPDCCH may be collectively referred to as the PDCCH, the NPUSCH may be referred to as the PUSCH, and the NPDSCH may be referred to as the PDSCH.

Hereinabove, the BS and UE operations have been described based on the multi-TB scheduling structure based on one DCI. However, the principles of the present disclosure are also applicable to transmission of other types of information such as control channels based on UCI.

Regarding the methods proposed in the present disclosure, some of the following methods may be selected and applied. Each method may be performed independently with no combination, or one or more methods may be combined and executed. Several terms, symbols, and sequences used in this document may be replaced with other terms, symbols, and sequences as long as the principles of the present disclosure are maintained.

In this document, although an arbitrary transmission structure for transmission and reception of TBs or HARQ-ACK feedback is taken as an example to explain the principles of the disclosure, the proposed methods are not limited to the transmission forms of TBs or HARQ-ACK feedback unless otherwise specified. For example, in the case of TB transmission/reception, if multiple TBs are repeated, the TB transmission and reception structure may vary depending on whether interleaving is applied between TBs. Accordingly, it is obvious that the methods proposed in the present disclosure are applicable to any TB transmission structures as long as the principles of the present disclosure are maintained. In addition, in the case of HARQ-ACK feedback transmission/reception, both an individual HARQ-ACK method in which HARQ-ACKs for a plurality of TBs are transmitted on independent channels and a HARQ-ACK bundling/multiplexing method in which HARQ-ACK information for a plurality of TBs is transmitted together over one channel may be considered.

**F.3 HARQ-ACK Delay Determination Method**

**(Method 1) HARQ-ACK-delay-E is determined based on the number of TBs scheduled by one multi-TB scheduling DCI**

The methods proposed in the present disclosure may include a method of determining the size of HARQ-ACK-delay-E based on the number of TBs scheduled by a multi-TB scheduling DCI (Method 1). As a specific method, when the maximum number of TBs schedulable by one multi-TB scheduling DCI is Nmax, Nmax may be divided into L sections, and a different scheduling delay (or different scheduling delay candidates) may be configured for each section (this may be equally applied unless otherwise specified). For example, when L=2, a scheduling delay used when the number of scheduled TBs is less than or equal to N0 ($\leq$Nmax) may be different from a scheduling delay used when the number of scheduled TBs is more than or equal to N0.

As an example of applying Method 1, the scheduling delay used when the number of TBs scheduled by the multi-TB scheduling DCI is 1 may be configured to be different from the scheduling delay used when the number of TBs scheduled by the multi-TB scheduling DCI is 2 or more. In this case, the scheduling delay used when the number of TBs scheduled by the multi-TB scheduling DCI may be set equal to a scheduling delay used in a single-TB scheduling DCI. The scheduling delay used when the number of scheduled TBs is 2 or more may be set shorter than the scheduling delay used in the single-TB scheduling DCI. The reason for this is to allow the UE to maintain the conditions of the decoding and HARQ-ACK feedback preparation time required in the conventional single-TB scheduling DCI method when the UE receives only one TB in the multi-TB scheduling DCI. When this operation is applied to MTC, if the UE receives a multi-TB scheduling DCI and is scheduled with one TB and if transmission of the TB ends in subframe n-4, it may be expected that HARQ-ACK feedback transmission starts in subframe n in the same way as in the conventional single-TB scheduling method. If the UE is scheduled with a plurality of TBs and if transmission of all TBs ends in subframe n-a, HARQ-ACK feedback may start in subframe n, where a may have a value less than 4. When this operation is applied to NB-IoT, if one TB is scheduled, k0 candidates, which may be used to determine the HARQ-ACK-delay-E, may be set as the same as when the conventional single-TB scheduling DCI is used. If two TBs are scheduled, a relatively small number of candidates may be used.

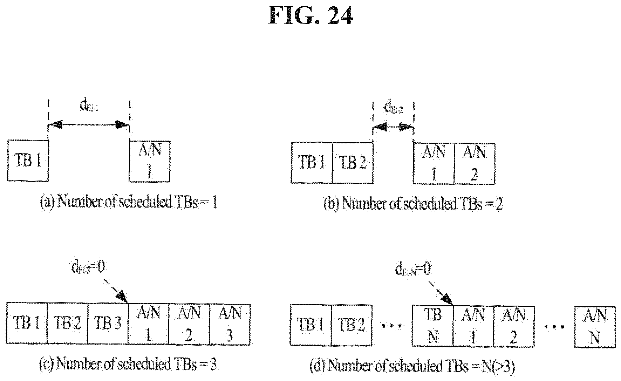

As another example of applying Method 1, when HARQ-ACK-delay-E used for single-TB scheduling is defined as d_s, if the number of TBs scheduled by a multi-TB scheduling DCI is N, HARQ-ACK-delay-E may be set to max(d_s-N+1,mg). In this case, mg may be determined so that the UE is guaranteed with the minimum gap required for the UE to switch from DL reception to UL transmission. For example, d_s may be 3, and mg may be 0 or 1. The above example may be applied only when TB transmission is not repeated. When this operation is applied to MTC, if the UE receives a multi-TB scheduling DCI and is scheduled with N TBs and if transmission of all TBs ends in subframe n-max(4-N+1,0), HARQ-ACK feedback may start in subframe n, where max(A,B) denotes the larger of A and B. In doing so, it is possible to guarantee the minimum time required for decoding of each scheduled TB and HARQ-ACK preparation and separate the UL transmission time and DL reception time when multiple TBs are scheduled. Further, it is also possible to prevent an increase in latency due to unnecessary delays. FIG. 24 schematically illustrates the above operation.

**(Method 2) HARQ-ACK-delay-E is determined based on the resource assignment size of TBs scheduled by one multi-TB scheduling DCI**

The methods proposed in the present disclosure may include a method of determining the size of HARQ-ACK-delay-E based on the resource assignment size of TBs scheduled by a multi-TB scheduling DCI (Method 2). As a specific method, when the size of the basic transmission unit of time or frequency domain resources of TBs schedulable by one multi-TB scheduling DCI is configured by the DCI (or a higher layer signal such as SIB/RRC), the size of the HARQ-ACK-delay-E may be determined based on the configured size. In this case, the basic transmission unit of the TB refers to a time and frequency resource region occupied by the TB based on one repetition in a transmission and reception structure where the TB may be repeated. For example, when the basic transmission unit of the TB is M subframes (symbols, slots, etc.) and the value of M is configured by DCI, the size of the HARQ-ACK-delay-E may be determined based on the M value.

As an example of applying Method 2, when this operation is applied to NB-IoT, k0 candidates, which may be used to determine the HARQ-ACK-delay-E, may be determined based on the basic transmission unit of an NPDSCH configured by the same DCI. In this case, the basic transmission unit of the NPDSCH may mean the number of subframes required to transmit one TB. More particularly, the basic transmission unit of the NPDSCH may mean the number of subframes of the NPDSCH designated by a value (e.g., ISF) represented by a resource assignment field included in the DCI. When the basic transmission unit of the NPDSCH is larger than or equal to M0 subframes based on a specific value M0, the current k0 candidates may be used. When the basic transmission unit of the NPDSCH is larger than M0 subframes, candidates less than k0 may be used.

Method 2 may be applied only when the number of TBs scheduled by the multi-TB scheduling DCI is more than one (e.g., two or more). This may be viewed as a combination of Method 1 and Method 2 proposed in the present disclosure. That is, when the number of scheduled TBs is one, the conventional single-TB scheduling method may be applied.

**(Method 3) HARQ-ACK-delay-E is determined based on the repetition size of TBs scheduled by one multi-TB scheduling DCI**

The methods proposed in the present disclosure may include a method of determining the size of HARQ-ACK-delay-E based on the repetition size of TBs scheduled by a multi-TB scheduling DCI (Method 3). As a specific method, when the repetition size per TB applied to TBs schedulable by one multi-TB scheduling DCI is configured by the DCI (or a higher layer signal such as SIB/RRC), the size of the HARQ-ACK-delay-E may be determined based on the configured size. For example, when the repetition size applied to the TB is set to R, the size of the HARQ-ACK-delay-E may be determined based on the R value.

**(Method 4) HARQ-ACK-delay-E is determined based on the number of TBs scheduled by one multi-TB scheduling DCI and the resource assignment and repetition sizes of each TB**

The methods proposed in the present disclosure may include a method of determining the size of HARQ-ACK-delay-E based on the number of TBs scheduled by a multi-TB scheduling DCI and the resource assignment and repetition sizes of each TB (Method 4). This may be viewed as a combination of Method 1, Method 2, and Method 3, and the contents proposed in the above methods may be used to configure Method 4.

As a specific method, when N TBs are scheduled by one multi-TB scheduling DCI, and when the same basic transmission unit size M and the same repetition size R are applied to all scheduled TBs, the size of the HARQ-ACK-delay-E may be determined based on the following value: $(N-1)*M*R$.

As an example of Method 4, the size of the HARQ-ACK-delay-E used when $(N-1)*M*R$ is less than or equal to P (where P is a predetermined threshold) may be set larger than the size of the HARQ-ACK-delay-E used when $(N-1)*M*R$ is more than P. As an example of the specific method, a structure in which k0, which is a scheduling delay for determining the transmission position of HARQ-ACK feedback, is determined as one of several value candidates by DCI as in NB-IoT may be considered. To apply the specific method, two sets of candidates for the k0 value: $Sk1 = \{k1-1, k1-2, ., k1-N1\}$ and $Sk2=\{k2-1, k2-2, ..., k2-N2\}$ may be defined. In this case, each candidate set is defined to satisfy the following relationships: $k1-1<k1-2<..,<k1-N1$ and $k2-1<k2-2<...<k2-N2$, and the two candidate sets may be defined to satisfy the following relationship: $k1-1 > k2-1$. For Sk2, a set of candidate values of the scheduling delay used in the single-TB scheduling method (e.g., {13, 15, 17, 18} when $\Delta f=15kHz$ and {13, 21} when $\Delta f=3.75kHz$) may be used in consideration of fallback operation. When the number of TBs scheduled by the multi-TB scheduling DCI is 2, the basic transmission unit of the TB scheduled by resource assignment of the DCI is M subframes, and the repetition size of the TB scheduled by an NPDSCH repetition field of the DCI is R, if the value of $M*R$ is more than or equal to a predefined threshold P, the value of k0 may be selected from Sk1. If the value of $M*R$ is less than the predefined threshold P, the value of k0 may be selected from Sk2. On the other hand, when the number of TBs scheduled by the multi-TB scheduling DCI is 1, the scheduling delay value used for single-TB scheduling may be used as it is.

As another example of Method 4, when HARQ-ACK-delay-E used for single-TB scheduling is defined as d_s, if the number of TBs scheduled by a multi-TB scheduling DCI is N, HARQ-ACK-delay-E may be set to $max(d\_s-(N-1)*M*R,mg)$. In this case, mg may be determined so that the UE is guaranteed with the minimum gap required for the UE to switch from DL reception to UL transmission. For example, d_s may be 3, mg may be 0 or 1, and max(A,B) denotes the larger of A and B. When this operation is applied to MTC, if the UE receives a multi-TB scheduling DCI and is scheduled with N TBs and if the time at which transmission of all TBs is completed is subframe $n-max(4-(N-1)*R,0)$, HARQ-ACK feedback may be configured to start in subframe n. When this operation is applied to NB-IoT, if the UE receives a multi-TB scheduling DCI and is scheduled with N TBs, if each TB is repeated R times by using M subframes as the basic transmission unit and the value of k0 value is indicated by a ACK-NACK resource field of the DCI, and if transmission of all scheduled TBs ends in subframe n, transmission of HARQ-ACK feedback may start in a valid subframe (e.g., NB-IoT DL subframe) that appears first after subframe $n+max(k0-(N-1)*M*R, mg)$. In this case, the value of mg may be set to 1 in consideration of the DL-to-UL switching time of the NB-IoT UE.

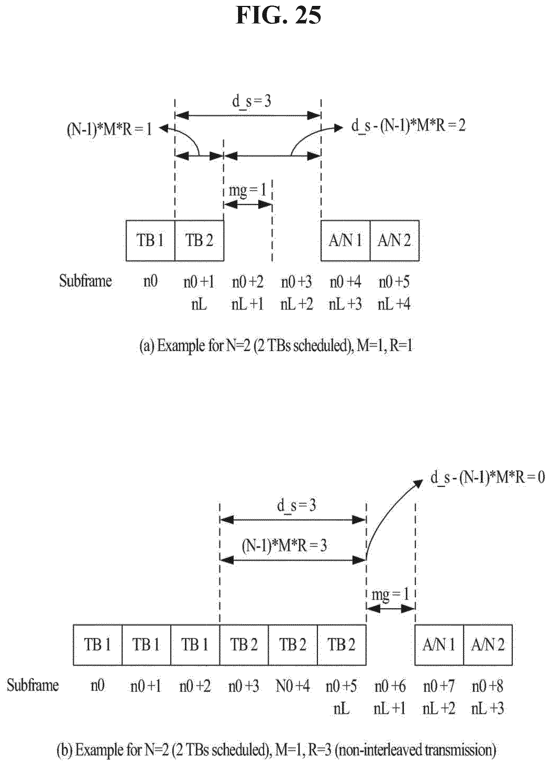

FIG. 25 illustrates examples to which Method 4 proposed in the present disclosure is applied. For convenience of description, although it is assumed that two TBs are scheduled (N=2), each TB is transmitted/received in one subframe (M=1), and the TB is repeatedly transmitted/received at least once (R$\geq$ 1), Method 4 proposed in the present disclosure is not limited to this assumption. Method 4 may be applied similarly/equally even when N, M, and R have different values. Also, it is assumed in the examples of FIG. 25 that TBs are transmitted without interleaving (non-interleaved transmission), but the methods proposed in the present disclosure are not limited thereto.

The UE or BS may receive or transmit DCI scheduling N TBs (refer to S2104 or S2204). The UE or BS may repeatedly receive or transmit the N TBs R times based on the DCI with no interleaving (refer to S2106 or S2206). The UE or BS may start transmitting or receiving HARQ-ACK information for the N TBs after a specific number of subframes from the time when the reception or transmission of the N TBs ends (refer to S2108 or S2208). When Method 4 of the present disclosure is applied, the specific number may be determined as max(d_s-(N-1)*M*R,mg). Assuming that d_s=3, mg=1, and M=1, the specific number may be max(3-(N-1)*R,1). That is, the specific number may be determined as the larger of (3-(N-1)*R) and 1.

Referring to FIG. 25(a), assuming that N=2, M=1, and R=1, d_s-(N-1)*M*R=2 and mg=1, so that d_s-(N-1)*M*R may be greater than mg. According to Method 4 of the present disclosure, a delay of two subframes may occur between the reception or transmission end time of the N TBs and the transmission or reception start time of the HARQ-ACK information. Accordingly, the UE or BS may start transmitting or receiving the HARQ-ACK information for the N TBs after the two subframes from the reception or transmission end time of the N TBs.

Referring to FIG. 25(b), assuming that N=2, M=1, and R=3, d_s-(N-1)*M*R=0 and mg=1, so that mg may be greater than d_s-(N-1)*M*R. According to Method 4 of the present disclosure, a delay of one subframe may occur between the reception or transmission end time of the N TBs and the transmission or reception start time of the HARQ-ACK information. Accordingly, the UE or BS may start transmitting or receiving the HARQ-ACK information for the N TBs after the one subframe from the reception or transmission end time of the N TBs.

Although Method 4 of the present disclosure has been described based on the delay between the TB reception or transmission end time and the HARQ-ACK information transmission or reception start time, Method 4 of the present disclosure may be applied based on subframe indices. For example, assuming that reception or transmission of N TBs ends in subframe nL, transmission or reception of HARQ-ACK information for the N TBs may start in subframe nL + max(d_s+1-(N-1)*M*R, mg+1). As a more specific example, assuming that d_s=3 and mg=1, transmission or reception of HARQ-ACK information for N TBs may start in subframe nL + max(4-(N-1)*M*R, 2).

As another example, as illustrated in FIG. 25, the value of (N-1)*M*R corresponds to the number of subframes for repeated reception or transmission of the remaining TBs except for the first TB (e.g., TB1). Assuming that transmission or reception of the first TB (e.g., TB1) ends in subframe n0 and transmission or reception of N TBs (e.g., TB1 and TB2) ends in subframe nL, a subframe in which transmission or reception of HARQ-ACK information starts according to Method 4 of the present disclosure may be determined based on n0 and nL. In this case, transmission or reception of HARQ-ACK information for the N TBs may start in subframe max(n0+d_s+1, nL+mg+1). Alternatively, the transmission or reception of the HARQ-ACK information for the N TBs may start in the larger of subframe n0+d_s+1 and subframe nL+mg+1. As a more specific example, assuming that d_s=3 and mg=1, the transmission or reception of the HARQ-ACK information for the N TBs may start in subframe max(n0+4, nL+2) (or the larger of subframe n0+4 and subframe nL+2).

**(Method 5) HARQ-ACK-delay-S is determined based on a position at which transmission of the last TB among TBs scheduled by one multi-TB scheduling DCI ends and a position at which transmission of HARQ-ACK feedback channel for the last TB starts**

The methods proposed in the present disclosure includes a method of determining the size of HARQ-ACK-delay-S based on a (time) interval between the time when transmission of the last TB in the time domain among TBs scheduled by a multi-TB scheduling DCI is completed and the time when transmission of HARQ-ACK feedback channel for the TB starts (Method 5). In this case, the transmission times of HARQ-ACK feedback channels for the remaining TBs other than the last TB in the time domain among the scheduled TBs may be determined as relative positions to the HARQ-ACK feedback channel for to the last TB.

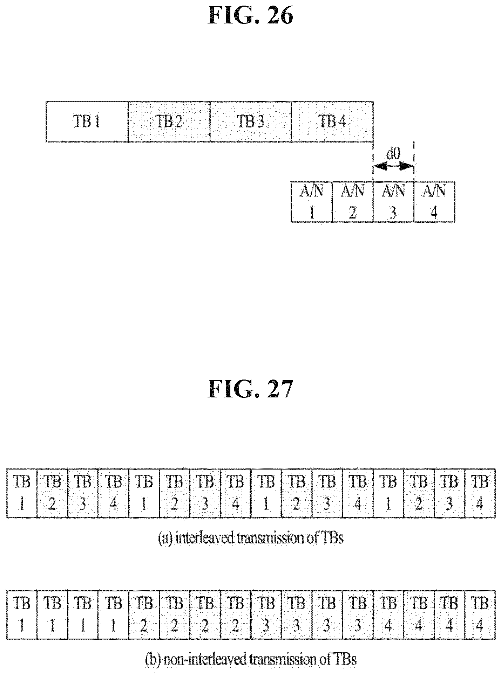

As a specific method of Method 5, the HARQ-ACK-delay-S may be determined as a scheduling delay from the time when transmission of all scheduled TBs is completed to the position where the HARQ-ACK feedback for to the last transmitted TB starts. For example, if N TBs are scheduled by one multi-TB scheduling DCI and N TBs are sequentially transmitted in the time domain in the following order: TB 1, TB 2, ... , TB N, a delay between the time when transmission of TB N is completed and the transmission time of a HARQ-ACK feedback channel for reporting ACK/NACK information for TB N may be determined as the HARQ-ACK-delay-S. In this case, transmission of the HARQ-ACK feedback for the scheduled TBs may be continuously performed in the same order as the TB transmission order. Therefore, transmission of HARQ-ACK feedback channels for TB 1 to TB N-1 may be determined as relative positions to the transmission time of the HARQ-ACK feedback channel for TB N. FIG. 26 schematically illustrates an example of the specific method.

According to Method 5, when UL and DL transmission and reception are capable of being performed simultaneously as in FD-FDD, the UE may obtain an effect of reducing latency based on the simultaneous UL and DL transmission and reception. In addition, the time for decoding and HARQ-ACK feedback preparation for the last transmitted TB may be guaranteed, and at the same time, HARQ-ACK feedback for all scheduled TBs may be concatenated, thereby preventing a resource fragment issue, which may occur when HARQ-ACK feedback transmission is distributed (here, the resource fragment issue means a phenomenon that time/frequency domain resources used by one UE are discontinuously located and spaces between the discontinuous resources are also discontinuous so that there are scheduling restrictions for other UEs to use the discontinuous resources and unnecessary waste of resources occurs).

**(Method 6) A HARQ-ACK delay is determined depending on whether an interleaved transmission pattern is applied to scheduled TBs**

The methods proposed in the present disclosure may include a method of determining the type and value of a HARQ-ACK delay depending on whether an interleaved transmission structure is applied to transmission of TBs scheduled by a multi-TB scheduling DCI (Method 6). In this case, the interleaved transmission structure means a structure in which when multiple TBs are repeatedly transmitted, the TBs are repeated and transmitted alternately. For example, when N TBs are repeatedly transmitted R times based on the interleaved transmission structure, each of the N TBs may be repeated and transmitted once and such a transmission pattern may be repeated R times. FIG. 27 schematically illustrates exemplary TB transmission patterns in which an interleaved transmission structure and a non-interleaved transmission structure are applied.

As a specific method of Method 6, when the interleaved transmission is applied, the HARQ-ACK delay of the conventional single-TB scheduling method may be applied regardless of the number of scheduled TBs. On the other hand, when the interleaved transmission is not applied, the HARQ-ACK delay for multi-TB scheduling may be applied. In this case, the HARQ-ACK delay for multi-TB scheduling may have a shorter length than the HARQ-ACK delay for single-TB scheduling. When the interleaved transmission is not applied, that is, when consecutive TBs are transmitted while completing sequentially scheduled repetition, decoding of early transmitted TBs and preparation of HARQ-ACK feedback may start before all scheduled TBs are completely transmitted, thereby reducing the HARQ-ACK delay. On the other hand, when the interleaved transmission is applied, it may be difficult to start decoding of TBs and preparation of HARQ-ACK feedback in advance because all scheduled TBs are transmitted almost at the same time.

In Method 6, whether the interleaved transmission pattern is applied may be enabled/disabled by higher layer signaling such as SIB or RRC, and/or whether the interleaved transmission pattern is applied may be dynamically configured by DCI.

**(Method 7) A HARQ-ACK delay is determined based on transmission of HARQ-ACK feedback for scheduled TBs**

The methods proposed in the present disclosure may include a method of determining a HARQ-ACK delay based on transmission of HARQ-ACK feedback for TBs scheduled by a multi-TB scheduling DCI (Method 7). In this case, the criterion of the HARQ-ACK feedback transmission may be whether or not HARQ-ACK bundling (or multiplexing) is applied. Herein, a transmission method in which an independent physical channel for transmitting HARQ-ACK feedback is present for each TB without applying HARQ-ACK feedback bundling (or multiplexing) is named individual HARQ-ACK feedback, and a method of transmitting ACK/NACK information for a plurality of TBs over one physical channel by applying HARQ-ACK feedback bundling (or multiplexing) is named bundled HARQ-ACK feedback.

As a specific method of Method 7, when the bundled HARQ-ACK feedback is used, the HARQ-ACK delay of the conventional single-TB scheduling method may be applied regardless of the number of scheduled TBs. When the individual HARQ-ACK feedback is used, the HARQ-ACK delay for multi-TB scheduling may be applied. In this case, the HARQ-ACK delay for multi-TB scheduling may have a shorter length than the HARQ-ACK delay for single-TB scheduling. In the individual HARQ-ACK feedback, since preparation of HARQ-ACK feedback for some TBs may start before transmission of all scheduled TBs is completed, the effect of reducing latency may be obtained. On the other hand, in the bundled HARQ-ACK feedback, since preparation of HARQ-ACK feedback may start after decoding of all TBs to which bundling (or multiplexing) is applied, the HARQ-ACK delay of the conventional single-TB scheduling method may be minimized.

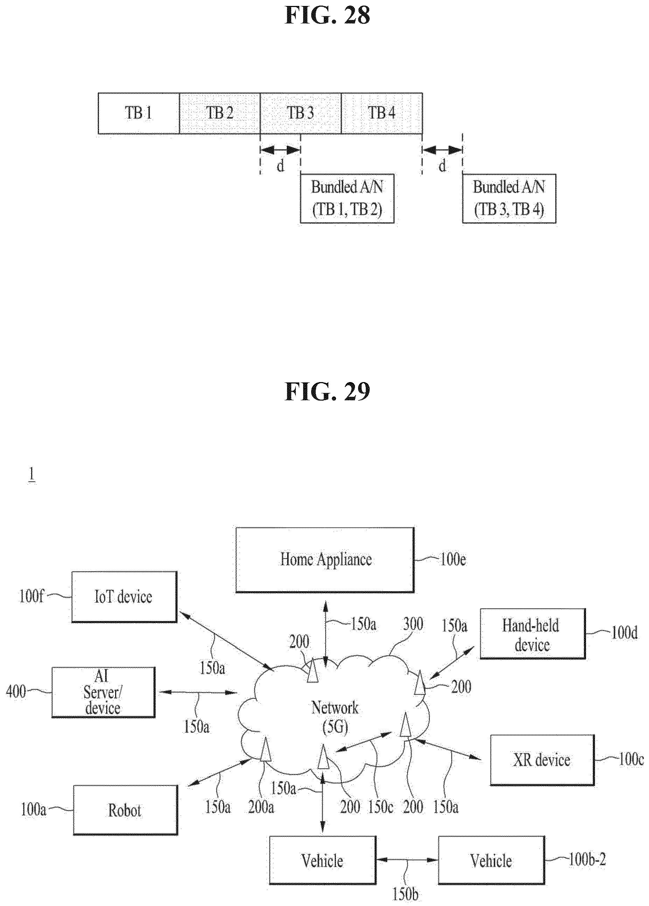

As another specific method of Method 7, in the bundled HARQ-ACK feedback, if TBs scheduled by DCI are divided into one or more sub-groups and HARQ-ACK bundling (or multiplexing) is performed for each sub-group, the HARQ-ACK delay of bundled HARQ-ACK feedback for each sub-group may be applied based on scheduling information about TBs belonging to the corresponding sub-group. For example, when N TBs are scheduled by one multi-TB scheduling DCI, the N TBs are divided into M sub-groups, and HARQ-ACK bundling (or multiplexing) is performed for each sub-group, the time when bundled HARQ-ACK feedback for each sub-group is transmitted may be determined by applying the HARQ-ACK delay based on the time when all TBs belonging to the sub-group are transmitted. In this case, a total of M pieces of bundled HARQ-ACK feedback may be transmitted. FIG. 28 schematically illustrates an example of the specific method.

**(Method 8) A HARQ-ACK delay is determined based on transmission/reception modes**

The methods proposed in the present disclosure may include a method of determining a HARQ-ACK delay based on the transmission/reception mode applied to the UE (Method 8). In MTC, as an example of the transmission/reception mode, a CE mode that may be determined according to the coverage of the UE may be selected (that is, either CE mode A or CE mode B may be selected) (refer to Table 6 and related descriptions). This may be because multi-TB scheduling may operate differently depending on the CE mode, and thus, the application of a suitable scheduling delay may also be different.

**F.4 HARQ-ACK Bundling Determination Method**

**(Method 9) When a plurality of bundled-HARQ-ACKs are transmitted, a HARQ process is determined for each bundled-HARQ-ACK**

The methods proposed in the present disclosure includes a criterion for mapping a HARQ process ID to each bundled-HARQ-ACK when a plurality of bundled-HARQ-ACKs are transmitted (Method 9). In the multi-TB scheduling DCI structure, a plurality of HARQ process IDs may be scheduled by a single DCI. Thus, when the UE decodes the single DCI, the UE may recognize all of the plurality of scheduled HARQ process IDs. In this case, it may be considered that the number of pieces of ACK/NACK information for HARQ processes included in one bundled HARQ-ACK may be limited. For example, the following case may be considered: up to 8 HARQ processes may be supported as in CE mode A of MTC FDD (see Table 6 and related descriptions) and one multi-TB scheduling DCI may schedule up to 8 HARQ processes. If the HARQ-ACK information for TBs that may be bundled and transmitted in one bundled-HARQ-ACK is limited smaller than 8 (e.g., 4), the UE may be configured to transmit a plurality of bundled HARQ-ACKs for one DCI.

However, if there are no configuration rules for bundled HARQ-ACKs between the BS and UE, the BS may not know exactly which HARQ process IDs received bundled HARQ-ACKs correspond to. To this end, separate signaling may be provided, but in this case, there is a disadvantage in that overhead increases. To solve such problems, the present disclosure proposes a method of configuring and transmitting a plurality of bundled HARQ-ACKs according to predetermined rules when the maximum number of pieces of HARQ-ACK information included in one bundled-HARQ-ACK is limited and transmission of multiple bundled HARQ-ACKs is allowed because one DCI schedules a plurality of TBs.

In the following description, for convenience, it is assumed that transmission and reception are performed in MTC CE mode A (see Table 6 and related descriptions) of the FDD structure (up to 8 HARQ processes are supported). In addition, it is also assumed that a multi-TB scheduling DCI is capable of scheduling up to 8 TBs and one bundled HARQ-ACK may represent up to 4 pieces of HARQ-ACK information. However, this is merely an example for explanation, and the methods proposed in the present disclosure are applicable to other transmission/reception structures having the same purpose.

Method 9 may be configured by a combination of one or more of the following options.

**(Option 9-1)** When the number of HARQ processes scheduled by one multi-TB DCI is P and the maximum number of HARQ processes that may be included in one bundled HARQ-ACK is Q, the number of bundled HARQ-ACKs related to the one multi-TB scheduling DCI may be $\lceil P/Q \rceil$ (where $\lceil \rceil$ denotes the ceiling function). For example, in MTC CE mode A, when 4 or less HARQ processes are scheduled, one bundled HARQ-ACK may be used, and when more than 4 HARQ processes are scheduled, two bundled HARQ-ACKs may be used. The reason for this is to increase UL resource efficiency by maintaining the number of transmitted bundled HARQ-ACKs as small as possible while satisfying the transmission restrictions of bundled HARQ-ACKs.

**(Option 9-2)** When the number of HARQ processes scheduled by one multi-TB DCI is P and R bundled HARQ-ACKs are configured, if the following condition of mod(P,R)=0 is satisfied, P/R HARQ processes are equally applied to all bundled HARQ-ACKs. Otherwise, the number of HARQ processes related to mod(P,R) bundled HARQ-ACKs early in order may increase by one (where mod denotes the modulo operation). For example, in MTC CE mode A, if two bundled HARQ-ACKs are configured and an odd number of HARQ processes are scheduled, the number of HARQ processes related to a bundled HARQ-ACK early in transmission order may be determined to be one more than the number of HARQ processes related to a next bundled HARQ-ACK. Considering the time required for the UE to decode received TBs and prepare for HARQ-ACK transmission, the above option may minimize the HARQ-ACK delay because the UE may prepare for bundled HARQ-ACKs for decoded TBs in advance.

**(Option 9-3)** If a plurality of bundled HARQ-ACKs needs to be transmitted for one multi-TB DCI, a HARQ process related to each bundled HARQ-ACK may be determined based on the transmission order of TBs. For example, when the number of HARQ processes scheduled by one multi-TB DCI is P and the numbers of HARQ processes related to R bundled HARQ-ACKs are Q1, Q2, ..., QR, respectively, the Q1, Q2, ..., QR HARQ processes may be determined to be respectively related to the R bundled HARQ-ACKs based on the transmission order of TBs. For example, in MTC CE mode A, when two bundled HARQ-ACKs are configured and Q1 and Q2 HARQ processes are related to the two bundled HARQ-ACKs, respectively, a bundled HARQ-ACK transmitted earlier in the time domain may represent HARQ-ACK information for Q1 TBs transmitted earlier in the time domain, and a subsequent bundled HARQ-ACK may represent HARQ-ACK information for Q2 TBs transmitted after the Q1 TBs.

(Option 9-4) If a plurality of bundled HARQ-ACKs needs to be transmitted for one multi-TB DCI, a HARQ process related to each bundled HARQ-ACK may be determined based on the order of HARQ process IDs. For example, when the number of HARQ processes scheduled by one multi-TB DCI is P and the numbers of HARQ processes related to R bundled HARQ-ACKs are Q1, Q2, ..., QR, respectively, the Q1, Q2, ... , QR HARQ processes may be determined to be respectively related to the R bundled HARQ-ACKs based on ascending (or descending) order of HARQ process IDs. This option may be particularly advantageous when the transmission order of TBs is complicatedly entangled as in interleaved transmission.

(Option 9-5) If two bundled HARQ-ACKs needs to be transmitted for one multi-TB DCI, a HARQ process related to each bundled HARQ-ACK may be determined with preference to NDI information. For example, it may be assumed that among HARQ processes scheduled by one multi-TB DCI, the numbers of HARQ processes designated as NDI=0 and NDI=1 are P0 and P1, respectively, there are two independent bundled HARQ-ACK transmission channels: HARQ-ACK-0 and HARQ-ACK-1, and the numbers of HARQ processes related to HARQ-ACK-0 and HARQ-ACK-1 are Q0 and Q1, respectively. If PO>Q0, Q0 HARQ processes of NDI=0 may be related to HARQ-ACK-0, and the remaining P0-Q0 HARQ processes of NDI=0, which are not related to HACK-ACK-0, and P1 HARQ processes of NDI=1 may be related to HARQ-ACK-1. On the contrary, if P0<Q0, Q1 HARQ processes of NDI=1 may be related to HARQ-ACK-1, and the remaining P1-Q1 HARQ processes of NDI=1, which are not related to HARQ-ACK-1, and P0 HARQ processes of NDI=0 may be related to HARQ-ACK-0. This option may be advantageous when the multi-TB scheduling DCI supports a common NDI structure. The common NDI structure means that the NDIs of all HARQ processes scheduled with only one bit are commonly represented when a plurality of HARQ processes are scheduled by DCI. According to the common NDI structure, since HARQ processes have the same NDI during retransmission, the above-described HARQ-ACK bundling may be suitable.

### (Method 10) Bundling is determined based on the number of scheduled TBs

The methods proposed in the present disclosure may include a method of determining bundling based on the number of TB scheduled by one multi-TB scheduling DCI when the multi-TB scheduling DCI is used and the bundling is allowed (Method 10). In MTC using the conventional single-TB scheduling DCI, bundling is designed to be performed only when both an MPDCCH carrying DCI and a PDSCH carrying data are repeated once. The reason for this is to overcome a case in which the transmission period of TBs overlaps with the transmission period of HARQ-ACKs when a plurality of TBs are transmitted by a plurality of DCIs. In the case of the single-TB scheduling DCI, the bundled HARQ-ACK transmission has a disadvantage of not being able to identify a DCI missing situation in which the UE may not detect a specific DCI, and thus, there may arise problems when the number of repetition increases. On the other hand, in the case of the multi-TB scheduling DCI, when the UE acquires one DCI, the UE may process scheduling information for a plurality of TBs without missing. In addition, if the bundled HARQ-ACK transmission is supported when the MPDCCH and PDSCH are repeated, the bundled HARQ-ACK transmission may be applied even when the HARQ-ACK transmission is repeated, thereby obtaining more advantages in terms of UL resource efficiency.

However, when the multi-TB scheduling DCI supports an extended bundling structure and the extended bundling structure is always applied regardless of the number of scheduled TBs, if a virtual fallback operation (e.g., an operation of scheduling only a single TB with the multi-TB scheduling DCI) is used to obtain the effect of the conventional single-TB scheduling DCI, the expected effect may not be obtained for bundling at the stage of HARQ-ACK transmission. To solve such a problem, the present disclosure proposes a method in which bundling is applied based on the number of TBs scheduled by one DCI when the multi-TB scheduling DCI is used.

According to Method 10, when the multi-TB scheduling DCI capable of scheduling a plurality of TBs with one DCI is used and when the HARQ-ACK bundling method capable of representing HARQ-ACKs for a plurality of TBs with a 1-bit bundled HARQ-ACK channel is used, if there are a plurality of methods and/or conditions of applying HARQ-ACK bundling, a condition for selecting the plurality of methods and/or conditions may be determined as the number of TBs scheduled by one multi-TB scheduling DCI. For example, it may be considered that in MTC, there are a legacy HARQ-ACK bundling method available for legacy UEs without multi-TB scheduling capability and a new HARQ-ACK bundling method applicable when the multi-TB scheduling DCI is used. In this case, if the number of TBs scheduled by one multi-TB scheduling DCI is plural (two or more), the new HARQ-ACK bundling method may be used. On the contrary, if the number of TBs scheduled by the one multi-TB scheduling DCI is one, the legacy HARQ-ACK bundling method may be applied. As a specific example of applying the method, for the new HARQ-ACK bundling method, the HARQ-ACK bundling may be applied even when the MPDCCH and PDSCH are repeated. For the legacy HARQ-ACK bundling method, the HARQ-ACK bundling may not be applied when the MPDCCH and PDSCH are repeated as in the structure where the HARQ-ACK bundling is supported in MTC. This means that even when the multi-TB scheduling DCI is used, if only one TB is scheduled by the DCI, the HARQ-ACK bundling method will fall back to the legacy HARQ-ACK bundling method. In this example, when Method 10 of the present disclosure is applied, if the number of TBs scheduled by one multi-TB scheduling DCI is plural (two or more), the HARQ-ACK bundling may be applied only to a plurality of TBs scheduled by the same DCI, and the HARQ-ACK bundling may not be applied to TB(s) scheduled by different DCIs.

Hereinabove, the present disclosure has been described on the assumption of MTC CE mode A (see Table 6 and related descriptions) for convenience, this is merely an example for description, and the methods proposed in the present disclosure are applicable to other transmission and reception structures having the same purpose.

## G. Communication Systems and Devices to Which Present Disclosure Is Applied

The various details, functions, procedures, proposals, methods, and/or operational flowcharts related to the methods described above in this document may be applied to a variety of fields that require wireless communication/connection (e.g., 5G) between devices.

Hereinafter, a description will be given in detail with reference to drawings. In the following drawings/descriptions, the same reference numerals may denote the same or corresponding hardware blocks, software blocks, or functional blocks unless specified otherwise.

FIG. 29 illustrates a communication system 1 applied to the proposed methods of the present disclosure.

Referring to FIG. 29, the communication system 1 applied to the present disclosure includes wireless devices, BSs, and a network. The wireless devices refer to devices performing communication by radio access technology (RAT) (e.g., 5G New RAT (NR) or LTE), which may also be called communication/radio/5G devices. The wireless devices may include, but no limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle equipped with a wireless communication function, an autonomous driving vehicle, and a vehicle capable of performing vehicle-to-vehicle (V2V) communication. The vehicles may include an unmanned aerial vehicle (UAV) (e.g., a drone). The XR device may include an augmented reality (AR)/virtual reality (VR)/mixed reality (MR) device, and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smart glasses), and a computer (e.g., a laptop). The home appliance may include a TV, a refrigerator, and a washing machine. The IoT device may include a sensor and a smart meter. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured by using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f and the BSs 200, or between the BSs 200. Herein, the wireless communication/connections may be established through various RATs (e.g., 5G NR) such as UL/DL communication 150a, sidelink communication 150b (or, D2D communication), or inter-BS communication 150c (e.g. relay, integrated access backhaul (IAB)). A wireless device and a BS/a wireless devices, and BSs may transmit/receive radio signals to/from each other through the wireless communication/connections 150a, 150b, and 150c. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

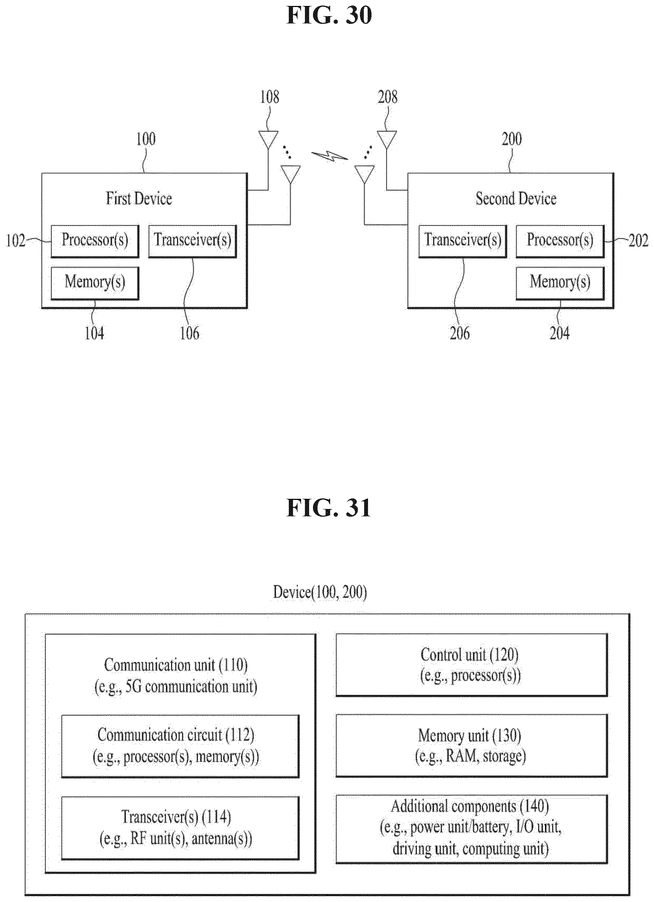

FIG. 30 illustrates wireless devices applicable to the present disclosure.

Referring to FIG. 30, a first wireless device 100 and a second wireless device 200 may transmit radio signals through a variety of RATs (e.g., LTE and NR). Herein, {the first wireless device 100 and the second wireless device 200} may correspond to {the wireless devices 100a to 100f and the BSs 200} and/or {the wireless devices 100a to 100f and the wireless devices 100a to 100f} of FIG. 29.

The first wireless device 100 may include at least one processor 102 and at least one memory 104, and may further include at least one transceiver 106 and/or at least one antenna 108. The processor 102 may control the memory 104 and/or the transceiver 106 and may be configured to implement the descriptions, functions, procedures, proposals, methods, and/or operational flowcharts disclosed in this document. For example, the processor 102 may process information within the memory 104 to generate first information/signal and then transmit a radio signal including the first information/signal through the transceiver 106. The processor 102 may receive a radio signal including second information/signal through the transceiver 106 and then store information obtained by processing the second information/signal in the memory 104. The memory 104 may be coupled to the processor 102 and store various types of information related to operations of the processor 102. For example, the memory 104 may store software code including commands for performing a part or all of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement an RAT (e.g., LTE or NR). The transceiver 106 may be coupled to the processor 102 and transmit and/or receive radio signals through the at least one antenna 108. The transceiver 106 may include a transmitter and/or a receiver. The transceiver 106 may be interchangeably used with an RF unit. In the present disclosure, a wireless device may refer to a communication modem/circuit/chip.

The second wireless device 200 may include at least one processor 202 and at least one memory 204, and may further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signal and then transmit a radio signal including the third information/signal through the transceiver 206. The processor 202 may receive a radio signal including fourth information/signal through the transceiver 206 and then store information obtained by processing the fourth information/signal in the memory 204. The memory 204 may be coupled to the processor 202 and store various types of information related to operations of the processor 202. For example, the memory 204 may store software code including commands for performing a part or all of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement an RAT (e.g., LTE or NR). The transceiver 206 may be coupled to the processor 202 and transmit and/or receive radio signals through the at least one antenna 208. The transceiver 206 may include a transmitter and/or a receiver. The transceiver 206 may be interchangeably used with an RF unit. In the present disclosure, a wireless device may refer to a communication modem/circuit/chip.

Hereinafter, hardware elements of the wireless devices 100 and 200 will be described in greater detail. One or more protocol layers may be implemented by, but not limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented in hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented in firmware or software, which may be configured to include modules, procedures, or functions. Firmware or software configured to perform the descriptions, functions, procedures, proposals, methods, and/or operational flowcharts disclosed in this document may be included in the one or more processors 102 and 202, or may be stored in the one or more memories 104 and 204 and executed by the one or more processors 102 and 202. The descriptions, functions, procedures, proposals, methods, and/or operational flowcharts disclosed in this document may be implemented as code, instructions, and/or a set of instructions in firmware or software.

The one or more memories 104 and 204 may be coupled to the one or more processors 102 and 202 and store various types of data, signals, messages, information, programs, code, instructions, and/or commands. The one or more memories 104 and 204 may be configured as read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be coupled to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be coupled to the one or more processors 102 and 202 and transmit and receive radio signals. For example, the one or more processors 102 and 202 may control the one or more transceivers 106 and 206 to transmit user data, control information, or radio signals to one or more other devices. The one or more processors 102 and 202 may control the one or more transceivers 106 and 206 to receive user data, control information, or radio signals from one or more other devices. The one or more transceivers 106 and 206 may be coupled to the one or more antennas 108 and 208 and configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 31 illustrates another example of wireless devices applied to the present disclosure. The wireless devices may be implemented in various forms according to use-cases/services (refer to FIG. 29).

Referring to FIG. 31, wireless devices 100 and 200 may correspond to the wireless devices 100 and 200 of FIG. 30 and may be configured as various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 30. For example, the transceiver(s) 114 may include the one or more transceivers 106 and 206 and/or the one or more antennas 108 and 208 of FIG. 30. The control unit 120 is electrically coupled to the communication unit 110, the memory unit 130, and the additional components 140 and provides overall control to operations of the wireless devices. For example, the control unit 120 may control an electric/mechanical operation of the wireless device based on programs/code/commands/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to the types of wireless devices. For example, the additional components 140 may include at least one of a power unit/battery, an input/output (I/O) unit, a driver, and a computing unit. The wireless device may be configured as, but not limited to, the robot (100a of FIG. 29), the vehicles (100b-1 and 100b-2 of FIG. 29), the XR device (100c of FIG. 29), the hand-held device (100d of FIG. 29), the home appliance (100e of FIG. 29), the IoT device (100f of FIG. 29), a digital broadcasting terminal, a hologram device, a public safety device, an MTC device, a medicine device, a FinTech device (or a finance device), a security device, a climate/environment device, the AI server/device (400 of FIG. 29), the BSs (200 of FIG. 29), a network node, etc. The wireless device may be mobile or fixed according to a use-case/service.

In FIG. 31, all of the various elements, components, units/portions, and/or modules in the wireless devices 100 and 200 may be coupled to each other through a wired interface or at least a part thereof may be wirelessly coupled to each other through the communication unit 110. For example, in each of the wireless devices 100 and 200, the control unit 120 and the communication unit 110 may be coupled by wire, and the control unit 120 and first units (e.g., 130 and 140) may be wirelessly coupled through the communication unit 110. Each element, component, unit/portion, and/or module within the wireless devices 100 and 200 may further include one or more elements. For example, the control unit 120 may be configured as a set of one or more processors. For example, the control unit 120 may be configured as a set of a communication control processor, an application processor, an electronic control unit (ECU), a graphical processing unit, and a memory control processor. In another example, the memory unit 130 may be configured as a random access memory (RAM), a dynamic RAM (DRAM), a read only memory (ROM), a flash memory, a volatile memory, a non-volatile memory, and/or a combination thereof.

An implementation example of FIG. 31 will be described in detail with reference to the drawings.

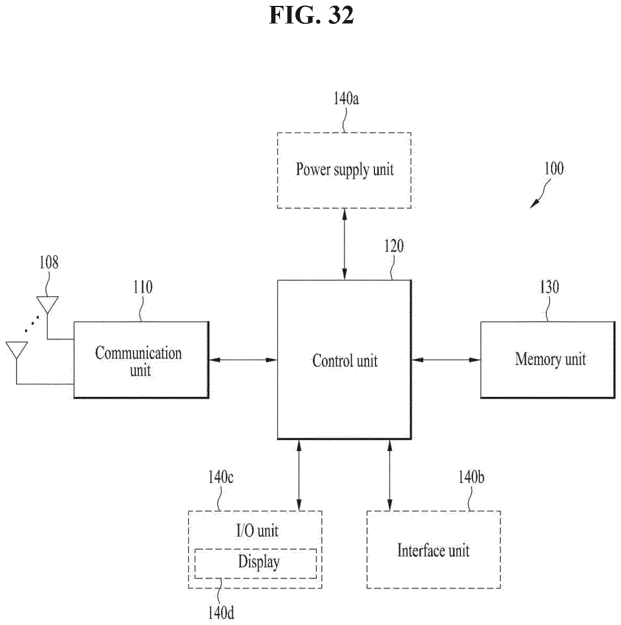

FIG. 32 illustrates a portable device applied to the present disclosure. The portable device may include a smartphone, a smartpad, a wearable device (e.g., a smart watch and smart glasses), and a portable computer (e.g., a laptop). The portable device may be referred to as a mobile station (MS), a user terminal (UT), a mobile subscriber station (MSS), a subscriber station (SS), an advanced mobile station (AMS), or a wireless terminal (WT).

Referring to FIG. 32, a portable device 100 may include an antenna unit 108, a communication unit 110, a control unit 120, a power supply unit 140a, an interface unit 140b, and an I/O unit 140c. The antenna unit 108 may be configured as a part of the communication unit 110. The blocks 110 to 130/140a to 140c correspond to the blocks 110 to 130/140 of FIG. 31, respectively.

The communication unit 110 may transmit and receive signals (e.g., data and control signals) to and from another wireless device and a BS. The control unit 120 may perform various operations by controlling elements of the portable device 100. The control unit 120 may include an application processor (AP). The memory unit 130 may store data/parameters/programs/code/commands required for operation of the portable device 100. Further, the memory unit 130 may store input/output data/information. The power supply unit 140a may supply power to the portable device 100, and include a wired/wireless charging circuit and a battery. The interface unit 140b may include various ports (e.g., an audio I/O port and a video I/O port) for connectivity to external devices The I/O unit 140c may acquire information/signals (e.g., touch, text, voice, images, and video) input by a user, and store the acquired information/signals in the memory unit 130. The communication unit 110 may receive or output video information/signal, audio information/signal, data, and/or information input by the user. The I/O unit 140c may include a camera, a microphone, a user input unit, a display 140d, a speaker, and/or a haptic module.

For example, for data communication, the I/O unit 140c may acquire information/signals (e.g., touch, text, voice, images, and video) received from the user and store the acquired information/signal sin the memory unit 130. The communication unit 110 may convert the information/signals to radio signals and transmit the radio signals directly to another device or to a BS. Further, the communication unit 110 may receive a radio signal from another device or a BS and then restore the received radio signal to original information/signal. The restored information/signal may be stored in the memory unit 130 and output in various forms (e.g., text, voice, an image, video, and a haptic effect) through the I/O unit 140c.

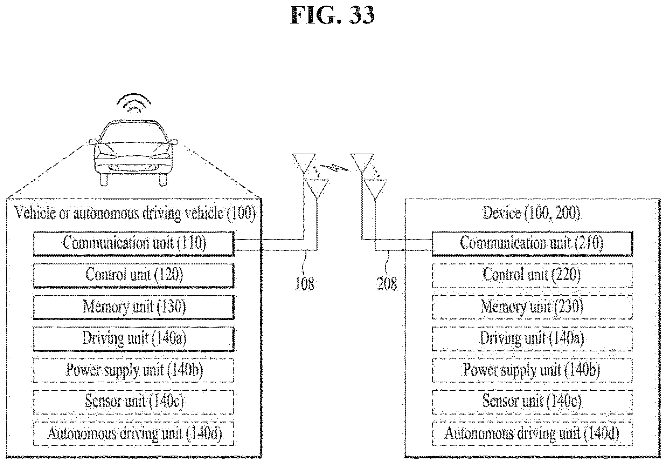

FIG. 33 illustrates a vehicle or an autonomous driving vehicle applied to the present disclosure. The vehicle or autonomous driving vehicle may be configured as a mobile robot, a car, a train, a manned/unmanned aerial vehicle (AV), a ship, or the like.

Referring to FIG. 33, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 31, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to travel on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire vehicle state information, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement a technology for maintaining a lane on which a vehicle is driving, a technology for automatically adjusting speed, such as adaptive cruise control, a technology for autonomously traveling along a determined path, a technology for traveling by automatically setting a path, when a destination is set, and the like.

For example, the communication unit 110 may receive map data, traffic information data, and so on from an external server. The autonomous driving unit 140d may generate an autonomous driving path and a driving plan from the obtained data. The control unit 120 may control the driving unit 140a such that the vehicle or autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain vehicle state information and/or ambient environment information. The autonomous driving unit 140d may update the autonomous driving path and the driving plan based on the newly obtained data/information. The communication unit 110 may transmit information about a vehicle position, the autonomous driving path, and/or the driving plan to the external server. The external server may predict traffic information data using AI technology or the like, based on the information collected from vehicles or autonomous driving vehicles and provide the predicted traffic information data to the vehicles or the autonomous driving vehicles.

The methods described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in the methods of the present disclosure may be rearranged. Some constructions of any one method may be included in another method and may be replaced with corresponding constructions of another method. It is obvious to those skilled in the art that claims that are not explicitly cited in each other in the appended claims may be presented in combination as an embodiment of the present disclosure or included as a new claim by a subsequent amendment after the application is filed.

## INDUSTRIAL APPLICABILITY

The present disclosure is applicable to wireless communication devices such as a User Equipment (UE) and a Base Station (BS) operating in various wireless communication systems including 3GPP LTE/LTE-A/5G (or New RAT (NR)).

## Claims

1. A method of transmitting hybrid automatic repeat request acknowledgment (HARQ-ACK) information by a user equipment (UE) operating in half duplex frequency division duplex (HD-FDD) in a wireless communication system supporting multi-transport block scheduling, the method comprising:

   receiving downlink control information (DCI) scheduling N transport blocks;
   receiving the N transport blocks R times repeatedly without interleaving based on the DCI; and
   starting transmission of HARQ-ACK information for the N transport blocks after a specific number of subframes from a time at which the reception of the N transport blocks ends,
   wherein the specific number is determined as a greater of $(3-(N-1)*R)$ and 1.

2. The method of claim 1, wherein the HARQ-ACK information for the N transport blocks is transmitted based on bundling.

3. The method of claim 2, wherein based on that a number of HARQ processes scheduled by the DCI is P and a maximum number of HARQ processes bundled into one piece of HARQ-ACK information is Q, a number of pieces of the bundled HARQ-ACK information is $\lceil P/Q \rceil$, where $\lceil \ \rceil$ denotes a ceiling function.

4. The method of claim 2, wherein based on that a number of HARQ processes scheduled by the DCI is P, a number of pieces of the bundled HARQ-ACK information is T, and mod(P,T) is 0, a same number of HARQ processes is determined in relation to the bundled HARQ-ACK information,

   wherein based on that the mod(P,T) is not 0, a number of HARQ processes related to bundled HARQ-ACK information early in order is determined more than a number of HARQ processes related to bundled HARQ-ACK information late in the order, and
   wherein mod denotes a modulo operation.

5. The method of claim 2, wherein HARQ processes related to the bundled HARQ-ACK information are determined based on order of receiving the transport blocks.

6. The method of claim 2, wherein HARQ processes related to the bundled HARQ-ACK information are determined based on HARQ process identification information.

7. The method of claim 1, wherein the wireless communication system supports machine type communication (MTC), and wherein the UE is configured with coverage enhanced (CE) mode A.

8. The method of claim 1, wherein N is an integer greater than 1, and wherein R is an integer greater than or equal to 1.

9. A user equipment (UE) configured to operate in half duplex frequency division duplex (HD-FDD) and transmit hybrid automatic repeat request acknowledgment (HARQ-ACK) information in a wireless communication system supporting multi-transport block scheduling, the UE comprising:

   a transceiver; and
   a processor configured to control the transceiver and perform operations including:

   receiving downlink control information (DCI) scheduling N transport blocks;
   receiving the N transport blocks R times repeatedly without interleaving based on the DCI; and
   starting transmission of HARQ-ACK information for the N transport blocks after a specific number of subframes from a time at which the reception of the N transport blocks ends,
   wherein the specific number is determined as a greater of $(3-(N-1)*R)$ and 1.

10. A computer-readable storage medium storing instructions configured to cause a processor to implement operations when executed by the processor,
    wherein the operations comprises:

    receiving downlink control information (DCI) scheduling N transport blocks;
    receiving the N transport blocks R times repeatedly without interleaving based on the DCI; and
    starting transmission of HARQ-ACK information for the N transport blocks after a specific number of subframes from a time at which the reception of the N transport blocks ends,
    wherein the operations are performed in half duplex frequency division duplex (HD-FDD), and
    wherein the specific number is determined as a greater of $(3-(N-1)*R)$ and 1.

# FIG. 1

EP 3 944 537 A1

# FIG. 2

# FIG. 3

Radio frame

Slot

| #0 | #1 | #2 | ... | #18 | #19 |

Sub-frame

(a)

One radio frame, $T_S = 307200T = 10ms$

One half-frame, $T_S = 153600T = 5ms$

One slot
$T_{slot} = 15360T_S$

$30720T_S$

| Subframe#0 | | | | Subframe#2 | Subframe3 | Subframe#4 | Subframe#5 | | | | Subframe#7 | Subframe#8 | Subframe#9 |

One subframe,
$30720T_S$

DwPTS    GP    UpPTS

DwPTS    GP    UpPTS

(b)

EP 3 944 537 A1

# FIG. 4

# FIG. 5

# FIG. 6

: SRS transmission region

: DMRS transmission region

: RB pair

# FIG. 7

# FIG. 8

**FIG. 9**

| Initial cell search | System information reception | Random access procedure | General DL/UL Tx/Rx |

eNB

| P/S-SCH & [DLRS] & PBCH | MPDCCH / PDSCH (BCCH) | PRACH | MPDCCH / PDSCH | PDCCH / PUCCH | MPDCCH / PDSCH | MPDCCH / PDSCH | PUSCH / PUCCH |

UE

S901    S902    S903    S904    S905    S906    S907    S908

· DL / UL  ACK / NACK
· UE CQI / PMI / rank reporting
    using PUSCH and PUCCH

# FIG. 10

# FIG. 11

# FIG. 12

## FIG. 13

Initial cell search | System information reception | Random access procedure | General DL/UL Tx/Rx

eNB

NPSS / NSSS & [DLRS] & NPBCH | NPDCCH / NPDSCH / (BCCH) | NPRACH | NPDCCH / NPDSCH | NPUSCH | NPDCCH / NPDSCH | NPDCCH / NPDSCH | NPUSCH

UE

S1301 | S1302 | S1303 | S1304 | S1305 | S1306 | S1307 | S1308

· DL / UL  ACK / NACK
· UE CQI / PMI / rank reporting using NPUSCH

# FIG. 14

10ms NB-frame

1ms length
NB-subframe₁₅ₖₕ𝗭

0.5ms NB-slot

$TS = (1 / 1.92M)s$

15K Hz OFDM symbol
with 10Ts CP

15K Hz OFDM symbol
with 9Ts CP

# FIG. 15

10ms NB-frame

2ms length
NB-subframe$_{3.75kHZ}$

GP length of one
15K OFDM symbol

2ms length NB-subframe$_{3.75kHZ}$
for 3.75K UL

$TS = (1 / 1.92M)s$

Potential SRS of
Legacy LTE

3.75K Hz OFDM
symbol

# FIG. 16

Even numbered frame (10ms)     Odd numbered frame (10ms)

12 subcarriers (180 kHz)

| 0 | 1 | 2 | 3 | 4 | 5 | 6 | 7 | 8 | 9 | 0 | 1 | 2 | 3 | 4 | 5 | 6 | 7 | 8 | 9 |

subframe (1ms)

NPBCH     NPDCCH (NPDSCH)     NPSS     NSSS

EP 3 944 537 A1

44

# FIG. 17

# FIG. 18

# FIG. 19

# FIG. 20

# FIG. 21

```
                    ┌─────────────┐
                    │    Start    │
                    └─────────────┘
                           │
                           ▼
    ┌──────────────────────────────────────┐
    │  Transmit configuration information on │ ⸦ S2102
    │          multi-TB scheduling           │
    └──────────────────────────────────────┘
                           │
                           ▼
    ┌──────────────────────────────────────┐
    │   Transmit DCI for DL data transmission│ ⸦ S2104
    │          (or UL data reception)        │
    └──────────────────────────────────────┘
                           │
                           ▼
    ┌──────────────────────────────────────┐
    │   Transmit DL data (or receive UL data)│ ⸦ S2106
    │            via one or more TBs         │
    └──────────────────────────────────────┘
                           │
                           ▼
    ┌ ─ ─ ─ ─ ─ ─ ─ ─ ─ ─ ─ ─ ─ ─ ─ ─ ─ ─ ┐
    │   Receive (transmit) HARQ ACK feedback │ ⸦ S2108
    │      (if there is feedback channel)    │
    └ ─ ─ ─ ─ ─ ─ ─ ─ ─ ─ ─ ─ ─ ─ ─ ─ ─ ─ ┘
                           │
                           ▼
                    ┌─────────────┐
                    │     End     │
                    └─────────────┘
```

# FIG. 22

Start

Receive configuration information on
multi-TB scheduling — S2202

Receive DCI for DL data reception
(or UL data transmission) — S2204

Receive DL data (or transmit UL data)
via one or more TBs — S2206

Transmit (receive) HARQ ACK feedback
(if there is feedback channel) — S2208

End

# FIG. 23

BS                                        UE          BS                                        UE

Transmit configuration information on                 Transmit configuration information on
multi-TB scheduling                                   multi-TB scheduling

Transmit DCI for DL data transmission                 Transmit DCI for UL data transmission

Transmit DL data (first)                              Transmit UL data (first)

Transmit DL data (second)                             Transmit UL data (second)

Transmit DL data (N-th)                               Transmit UL data (N-th)

HARQ-ACK feedback (if necessary)                      HARQ-ACK feedback (if necessary)

(a) Example of DL data transmission based on N TBs    (b) Example of UL data transmission based on N TBs

# FIG. 24

(a) Number of scheduled TBs = 1

(b) Number of scheduled TBs = 2

(c) Number of scheduled TBs = 3

(d) Number of scheduled TBs = N(>3)

# FIG. 25

$$d\_s = 3$$

$(N-1)*M*R = 1$ $\longleftarrow$ $d\_s - (N-1)*M*R = 2$

$mg = 1$

| TB 1 | TB 2 | | | A/N 1 | A/N 2 |

| Subframe | n0 | n0 +1 | n0 +2 | n0 +3 | n0 +4 | n0 +5 |
| | | nL | nL +1 | nL +2 | nL +3 | nL +4 |

(a) Example for N=2 (2 TBs scheduled), M=1, R=1

$d\_s - (N-1)*M*R = 0$

$$d\_s = 3$$

$$(N-1)*M*R = 3$$

$mg = 1$

| TB 1 | TB 1 | TB 1 | TB 2 | TB 2 | TB 2 | | A/N 1 | A/N 2 |

| Subframe | n0 | n0 +1 | n0 +2 | n0 +3 | N0 +4 | n0 +5 | n0 +6 | n0 +7 | n0 +8 |
| | | | | | | nL | nL +1 | nL +2 | nL +3 |

(b) Example for N=2 (2 TBs scheduled), M=1, R=3 (non-interleaved transmission)

# FIG. 26

| TB 1 | TB 2 | TB 3 | TB 4 |
|------|------|------|------|

d0

| A/N 1 | A/N 2 | A/N 3 | A/N 4 |
|-------|-------|-------|-------|

# FIG. 27

| TB 1 | TB 2 | TB 3 | TB 4 | TB 1 | TB 2 | TB 3 | TB 4 | TB 1 | TB 2 | TB 3 | TB 4 | TB 1 | TB 2 | TB 3 | TB 4 |
|---|---|---|---|---|---|---|---|---|---|---|---|---|---|---|---|

(a) interleaved transmission of TBs

| TB 1 | TB 1 | TB 1 | TB 1 | TB 2 | TB 2 | TB 2 | TB 2 | TB 3 | TB 3 | TB 3 | TB 3 | TB 4 | TB 4 | TB 4 | TB 4 |
|---|---|---|---|---|---|---|---|---|---|---|---|---|---|---|---|

(b) non-interleaved transmission of TBs

# FIG. 28

| TB 1 | TB 2 | TB 3 | TB 4 |
|------|------|------|------|

Bundled A/N
(TB 1, TB 2)

Bundled A/N
(TB 3, TB 4)

d

d

# FIG. 29

1

Home Appliance — 100e

100f — IoT device

150a   300   150a

200

Hand-held device — 100d

150a

400 — AI Server/device

200

150a

Network (5G)

200

XR device — 100c

100a — Robot

150a   200a

150a

200   150c   200   150a

Vehicle

Vehicle — 100b-2

150b

# FIG. 30

# FIG. 31

Device(100, 200)

# FIG. 32

140a

Power supply unit

100

120

108

110

Communication unit

Control unit

130

Memory unit

140c

I/O unit

Display

140d

140b

Interface unit

# FIG. 33

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2020/005741** |

**A. CLASSIFICATION OF SUBJECT MATTER**

*H04L 1/18(2006.01)i, H04L 1/16(2006.01)i, H04L 1/08(2006.01)i, H04L 5/00(2006.01)i, H04L 5/16(2006.01)i, H04W 4/70(2018.01)i, H04W 72/12(2009.01)i*

According to International Patent Classification (IPC) or to both national classification and IPC

**B. FIELDS SEARCHED**

Minimum documentation searched (classification system followed by classification symbols)
H04L 1/18; H04L 1/16; H04L 1/08; H04L 5/00; H04L 5/16; H04W 4/70; H04W 72/12

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: multiple transport block scheduling, HARQ-ACK(hybrid automatic repeat request acknowledgement), downlink control information(DCI), subframe

**C. DOCUMENTS CONSIDERED TO BE RELEVANT**

| Category* | Citation of document, with indication, where appropriate, of the relevant passages | Relevant to claim No. |
| --- | --- | --- |
| Y | LENOVO et al. Design of scheduling of multiple DL/UL transport blocks for MTC. R1-1904567. 3GPP TSG RAN WG1 Meeting #96bis. Xi'an, China. 29 March 2019 See sections 2.1, 2.6; and figure 4. | 1-10 |
| Y | QUALCOMM INCORPORATED. Scheduling of multiple DL/UL transport blocks. R1-1904519. 3GPP TSG RAN WG1 Meeting #96. Xi'an, China. 30 March 2019 See section 4. | 1-10 |
| Y | WO 2019-028684 A1 (HUAWEI TECHNOLOGIES CO., LTD.) 14 February 2019 See page 20, lines 15-35; and claim 4. | 3-5 |
| A | KR 10-2017-0060171 A (QUALCOMM INCORPORATED) 31 May 2017 See paragraphs [0035]-[0044]. | 1-10 |
| A | LG ELECTRONICS. Discussion on multiple transport blocks scheduling in MTC. R1-1904607. 3GPP TSG RAN WG1 Meeting #96bis. Xi'an, China. 30 March 2019 See section 2.1. | 1-10 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 AUGUST 2020 (24.08.2020) | **24 AUGUST 2020 (24.08.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2020/005741**

| Patent document cited in search report | Publication date | Patent family member | Publication date |
|---|---|---|---|
| WO 2019-028684 A1 | 14/02/2019 | CN 109845157 A | 04/06/2019 |
| | | EP 3657713 A1 | 27/05/2020 |
| | | KR 10-2020-0033958 A | 30/03/2020 |
| | | US 2020-0220666 A1 | 09/07/2020 |
| KR 10-2017-0060171 A | 31/05/2017 | CN 102971980 A | 13/03/2013 |
| | | CN 102971980 B | 09/03/2016 |
| | | CN 104486050 A | 01/04/2015 |
| | | CN 104486050 B | 08/05/2018 |
| | | EP 2589175 A2 | 08/05/2013 |
| | | EP 3101832 A2 | 07/12/2016 |
| | | JP 2013-537735 A | 03/10/2013 |
| | | JP 5623638 B2 | 12/11/2014 |
| | | KR 10-1740575 B1 | 26/05/2017 |
| | | KR 10-2013-0025439 A | 11/03/2013 |
| | | KR 10-2014-0088225 A | 09/07/2014 |
| | | US 2012-0002578 A1 | 05/01/2012 |
| | | US 9450707 B2 | 20/09/2016 |
| | | WO 2012-003382 A2 | 05/01/2012 |

Form PCT/ISA/210 (patent family annex) (January 2015)